(19)

Europäisches
Patentamt
European
Patent Office
Office européen
des brevets

(11) **EP 2 341 753 A1**

(12) **EUROPEAN PATENT APPLICATION**
published in accordance with Art. 153(4) EPC

(43) Date of publication:
    **06.07.2011 Bulletin 2011/27**

(21) Application number: **09815886.8**

(22) Date of filing: **24.09.2009**

(51) Int Cl.:
    ***H04W 80/04*** (2009.01)

(86) International application number:
    **PCT/JP2009/004825**

(87) International publication number:
    **WO 2010/035464 (01.04.2010 Gazette 2010/13)**

(84) Designated Contracting States:
    **AT BE BG CH CY CZ DE DK EE ES FI FR GB GR
    HR HU IE IS IT LI LT LU LV MC MK MT NL NO PL
    PT RO SE SI SK SM TR**
    Designated Extension States:
    **AL BA RS**

(30) Priority: **24.09.2008 JP 2008243700**

(71) Applicant: **Panasonic Corporation
    Kadoma-shi
    Osaka 571-8501 (JP)**

(72) Inventors:
    • **NG, Chan Wah
      Singapore 534415 (SG)**
    • **JEYATHARAN, Mohana Dhamayanthi
      Singapore 534415 (SG)**
    • **LIM, Chun Keong Benjamin
      Singapore 534415 (SG)**
    • **ASO, Keigo
      Osaka 540-6207 (JP)**
    • **HIRANO, Jun
      Osaka 540-6207 (JP)**

(74) Representative: **Grünecker, Kinkeldey,
    Stockmair & Schwanhäusser
    Anwaltssozietät
    Leopoldstrasse 4
    80802 München (DE)**

(54) **PREFIX ASSIGNING METHOD, PREFIX ASSIGNING SYSTEM AND MOBILE NODE**

(57) The present invention discloses a technique to bind home address of a mobile node to prefixes assigned to a mobile node having a plurality of interfaces, and the present invention reduces number of binding update messages and a packet size. According to this technique, length (e.g. 64 bits) of an original prefix P1 is extended by one bit and lower-level prefixes P11 and P12 with 65 bits each are generated, and by extending the length of the lower-level prefix P12 with 65 bits by one bit, lower-level prefixes P121 and P122 each with 66 bits are generated, and the lower-level prefixes P11, P121 and P122 are assigned to interfaces IF1, IF2 and IF3 of MN 200 respectively.

FIG. 2

EP 2 341 753 A1

**Description**

TECHNICAL FIELD

The present invention relates to a prefix assigning method to assign a prefix to a mobile node having a plurality of interfaces, and also to a system for assigning the prefixes.
Further, the invention relates to a mobile node in the system as described above.

BACKGROUND ART

Currently, a great number of mobile devices are performing communication with each other by using Internet Protocol (IP). Also, IETF (Internet Engineering Task Force) proposes MIPv6 (Mobility Support in IPv6; Mobile IP) such as the one disclosed in the Non-Patent Document 1 as given below to provide mobility support to the mobile devices and the network mobility support as disclosed in the Non-Patent Document 2 as given below. Each mobile node has a permanent home domain in the Mobile IP. When a mobile node is attached to its own home network, a primary global address known as home address (HoA) is assigned to it. Also, when the mobile node roams outside the home network and is attached to another external network, a temporary global address known as care-of address (CoA) is assigned.
In this mobility support, even when the mobile node is attached to the other external network, this mobile node can be reached by HoA. This reaching can be accomplished by introducing an entity known as a home agent (HA) into the home network. The mobile node registers its own CoA by a message known as a binding update (BU) message to HA. By this BU message, HA generates binding between HoA and CoA of the mobile node. HA intercepts the message destined to HoA of the mobile node and transfers a packet including the message by encapsulating into a packet to CoA of the mobile node. In this packet encapsulation, the intercepted packet is set to a payload of new packet, and this is known as packet tunneling.
Although this method can solve the problem of mobility, there remain several problems. One of the problems is that the mobile node must transmit a BU message to HA. For this purpose, in case the mobile node moves at high speed, the number of the BU messages to be generated is increased enormously. Also, when a distance between the mobile node and HA is long, much time is required until the BU message reaches HA. For this reason, when HA starts to transfer the packet to the updated CoA of the mobile node, the mobile node may not be at the position of CoA.
To solve these problems, a network-based local mobility management is proposed in the Non-Patent Document 2, the Patent Document 1, and the Patent Document 5 as given below. By this method, the mobile node can continuously use the same address even when points of attachments are changed within a local network domain. As a result, it is possible to alleviate frequent transmitting of the BU message to HA of the mobile node. Also, as a method to realize a concept similar to that of the local mobility management, the transmission of the BU message by the mobile node to a local anchor point is disclosed in hierarchical MIPv6 (the Patent Documents 2 and 3, and the Non-Patent Document 3).
In the network-based local mobility management, there are provided: one local mobility anchor (LMA), a plurality of mobile access gateways (MAG), and one AAA (Authentication, Authorization, and Accounting) server. MAG is operated as an access router where the mobile node is attached. Each time the mobile node is attached to MAG, MAG confirms first as to whether the mobile node has qualification to use the services of the local network domain or not to the AAA server. Also, the AAA server notifies a prefix to be assigned to the mobile node, i.e. an address, to MAG. By this notification, MAG can advertise the same prefix shown as a home network prefix (HNP) to the mobile node. At the same time, MAG must update LMA so that the packet transmitted to the prefix assigned to the mobile node can be tunnelized to MAG where the mobile node is currently attached. This updating can be accomplished when MAG transmits a proxy BU (PBU) message to LMA and the binding of the address used by the mobile node to the address of MAG is carried out.
This method is also known as Proxy Mobile IP (PMIP) because MAG transmits a BU message to LMA as a proxy of the mobile node, and LMA is operated as a home agent of the mobile node in a local network domain. Regardless of which MAG the mobile node is attached to, the mobile node refers to the advertisement of the same home network prefix (HNP), and it does not change its own address. Therefore, the mobile node has no need to frequently transmit the BU message to its own home agent.
In the proxy mobile IP (PMIP), an exclusively unique prefix is assigned to the mobile node. By this assignment, the mobile node can use the prefixes as desired. For instance, the prefix can be used in a mobile network, which is formed in coarse manner so that the nodes in the mobile node are divided or integrated together. In this case, it is necessary to divide the assigned prefixes (Patent Document 7). On the contrary, in order to facilitate the management of a plurality of mobile nodes, the mobile nodes can be bundled together by a single prefix (the Patent Document 10 and the Patent Document 9). Also, by using the means disclosed in the Patent Document 8 as given below, a part of the assigned prefixes can be given to the other mobile node (the Patent Document 8).
With the development of various different wireless techniques, mobile nodes have a number of different access interfaces (e.g. UMTS cellular interface, wireless Ethernet (registered trademark) 802.11 interface, WiMAX 802.16 interface, or Bluetooth (registered trademark) Interface). In the local mobility management, a method to support the mobile node with a plurality of interfaces, a plurality of prefixes, i.e. addresses, are assigned to the mobile node (e.g. see the Patent Document 4). According to the Non-Patent Document 2, the mobile node refers to different prefixes for each of the interfaces so long as the mobile node is roaming within the same network domain. In case of a node, which is roaming in an external domain and when the mobile IPv6 is used, this mobile node generates CoA from each of the prefixes and it must perform binding of a plurality of CoA's to HoA. This means that when the mobile node wants to communicate with each of Correspondent Node (CN) by using all interfaces available, the mobile node must transmit a plurality of BU messages to the home agent and CN by using a mechanism as disclosed in the Non-Patent Document 4 as given below.

Because unique prefix is assigned to the mobile node with regard to its own interface, it is assumed that a plurality of addresses is made up from the prefixes for various purposes. For instance, the mobile node works as a plurality of virtual machines, and each of the virtual machines may use each of the addresses made up from the prefixes. As another example, a plurality of different CoA's made up from the same prefix may be used in order that the mobile node can identify a plurality of different flows. Further, as another example, the mobile node may use a plurality of different CoA's to have communication with a plurality of different CN's. When it is assumed as described above, the mobile node must perform the binding of a plurality of different CoA's to HoA.

PRIOR ART DOCUMENT

PATENT DOCUMENT

[Patent Document 1] [PCT Patent Application Publication No. WO 03-107600A1] Maenpaa, S. and Vesterinen, S.: "A Method and System for Local Mobility Management"; December 2003.

[Patent Document 2] [PCT Patent Application Publication No. WO 2001-67798A1] El-Malki, K. et al.: "Hierarchical Mobility Management for Wireless Networks"; September 2001.

[Patent Document 3] [PCT Patent Application Publication No. WO 2004-036786A1] O'Neill,A.: "Mobile Node Handoff Methods and Apparatus"; April 2004.

[Patent Document 4] [US Patent Application Publication No. 2006-0227792A1] Wetterwald, P. et al.: "Access network clusterhead for providing local mobility management of a roaming IPv4 Node"; October 2006.

[Patent Document 5] [PCT Patent Application Publication No. WO 2006-058206A2] Chari, A. et al.: "A method of subnet roaming within a network"; June 2006.

[Patent Document 6] [PCT Patent Application Publication No. WO 2007-046624A1] Park, S. et al.: "Method and apparatus to provide for a handover on a wireless network", April 2007.

[Patent Document 7] [PCT Patent Application Publication No. WO 2007-149025A1] Rune, J. et al.: "Arrangements and methods in moving networks"; December 2007.

[Patent Document 8] [US Patent Application Publication No. US 2006-0140164A1] Patel, A, and Leung, K.: "Methods and apparatus for using DHCP for home address management or nodes attached to an edge device and for performing mobility and address management as a proxy home agent"; June 2006.

[Patent Document 9] [US Patent Application Publication No. US 2006-0209760A1] Saito, S., et al.: "Communication processing system, communication processing method, communication terminal, data transfer controller, and program", September 2006.

[Patent Document 10] [European Patent No. 1564958B1] Cho, S. et al.: "Method for assigning a virtual-ip zone in a mobile IPv6 system"; October 2007.

NON-PATENT DOCUMENT

[Non-Patent Document 1] Johnson, D.B., Perkins, C.E., and Arkko, J.: "Mobility Support in IPv6"; Internet Engineering Task Force Request for Comments 3775; June 2004.

[Non-Patent Document 2] Gundavelli, S., et al.: "Proxy Mobile IPv6"; Internet Engineering Task Force Draft: draft-ietf-netlmm-proxymip6-11.txt; February 2008.

[Non-Patent Document 3] Soliman, H. et al.: "Hierarchical Mobile IPv6 Mobility Management (HMIPv6)"; Internet Engineering Task Force Request for Comments 4140, August 2005.

[Non-Patent Document 4] Wakikawa, R. et al.: "Multiple Care-of Addresses Registration"; Internet Engineering Task Force Draft: draft-ietf-monami6-multiplecoa-06.txt, February 2008.

Now, description will be given on the problems to be solved by the invention.
In case a mobile node has a plurality of interfaces, to which prefixes are assigned, and if a BU message is transmitted to each of the assigned prefixes to perform the binding to the home address (HoA) of the mobile node, the number of messages will be increased. If one BU message is used to include binding information of all prefixes in order that the number of the BU messages may not be increased, packet size will be increased.

SUMMARY OF THE INVENTION

To solve the above problems, it is an object of the present invention to provide a prefix assigning method, a prefix assigning system, and a mobile node, by which it is possible to decrease the number of binding update messages or to reduce packet size with respect to a mobile node having a plurality of interfaces even when the prefixes are assigned to a plurality of interfaces.

To attain the above object, the present invention provides a prefix assigning method for assigning one prefix to a mobile node having a plurality of interfaces, wherein said method comprises:

a prefix length expending step for extending length of a first prefix by using said assigned prefix as said first prefix, and of generating a plurality of second prefixes to be assigned to each of said plurality of interfaces; and
an assigning step for selectively assigning said generated plurality of second prefixes to said plurality of interfaces.

Also, to attain the object as described above, the invention provides a prefix assigning system for assigning one prefix to a mobile node having a plurality of interfaces, wherein said system comprises:

a prefix length extending unit for generating a second prefix to be assigned to each of a plurality of interfaces by extending length of a first prefix by using said assigned prefix as said first prefix; and
an assignment unit for selectively assigning said generated plurality of second prefixes to said plurality of interfaces.

Further, to attain the object of the invention as described above, the invention provides a mobile node in a prefix assigning system to assign one prefix to a mobile node having a plurality of interfaces, wherein said mobile node comprises:

a prefix length extending unit for extending length of a first prefix by using said assigned prefix as said first prefix and for generating a plurality of second prefixes to be assigned to each of said plurality of interface; and
a transmission unit for transmitting said assigned first prefix and a message to be sent by binding to a home agent of said mobile node to said home agent of said mobile node.

With the arrangement as described above, even when one prefix is assigned to a mobile node having a plurality of interfaces, it is possible to assign different prefixes to each of the plurality of interfaces, and also to decrease the number of binding update messages and to reduce packet size.

Also, to attain the object as described above, the present invention provides a prefix assigning method for assigning different prefixes from an external domain to each of a plurality of interfaces of a mobile node, wherein said method comprises:

a step for notifying number of said interfaces from said mobile node to said external domain;
a step for said external domain selectively assigns a plurality of the first prefixes as many as said notified interfaces to said plurality of interfaces; and
a step for said mobile node transmits to home agent of said mobile node messages to be sent by binding second prefixes and home address of said mobile node by using common portion of said plurality of first prefixes as said second prefixes.

Further, to attain the object as described above, the present invention provides a prefix assigning system for assigning different prefixes from an external domain to each of a plurality of interfaces of a mobile node, wherein said system comprises;

a notification unit for notifying number of said interfaces from said mobile node to said external domain;
an assignment unit for said external domain selectively assigns a plurality of the first prefixes as many as said notified interfaces to said plurality of interfaces; and
a transmission unit for said mobile node transmits messages for sending by binding second prefixes and home address of said mobile node to home agent of said mobile node by using common portion of said plurality of first prefixes as said second prefixes.

With the arrangement as described above, it is possible to decrease the number of the binding update messages and to reduce the packet size even when different prefixes are assigned to a plurality of interfaces of the mobile node respectively.

Also, to attain the object as described above, the present invention provides a prefix assigning method for assigning one prefix to a mobile node having a plurality of interfaces, wherein said method comprises:

a step for extending length of a first prefix by using said assigned prefix as said first prefix, and generating a plurality of second prefixes, and mapping each of said generated plurality of second prefixes to a third prefixes with the same length as that of said first prefixes; and
a step for selectively assigning said mapped plurality of third prefixes to said plurality of interfaces.

Further, to attain the object as described above, the present invention provides a prefix assigning system for assigning one prefix to a mobile node having a plurality of interfaces, wherein said system comprises:

a prefix length extending unit for extending length of a first prefix by using said assigned prefix as said first prefix, generating a plurality of second prefixes, and processing each of said generated plurality of second prefixes to a third prefix with the same length as that of said first prefix by mapping; and
an assignment unit for selectively assigning said mapped plurality of third prefixes to said plurality of interfaces.

Further, with the arrangement as described above, even when one prefix is assigned to a mobile node having a plurality of interfaces, it is possible to assign different prefixes to each of the plurality of interfaces, and also to decrease the number of binding update messages and to reduce packet size.

Also, to attain the object as described above, the present invention provides a prefix assigning method for assigning one prefix to a mobile node having a plurality of interfaces from an external domain or for assigning a prefix different from said external domain to each of a plurality of interfaces of said mobile node, wherein said method comprises at least two of the following prefix assigning steps:

a first prefix assigning step of extending length of a first prefix by using said assigned prefix as said first prefix, generating a plurality of second prefixes to be assigned to each of said plurality of interfaces, and selectively assigning said generated plurality of second prefixes to said plurality of interfaces;
a second prefix assigning step of notifying number of said interfaces to said external domain from said mobile node, and selectively assigning said external domain to a plurality of first prefixes as many as said notified interface to said plurality of interfaces, and transmitting a message for binding of home address of said mobile node with second prefixes by using common portion of said plurality of first prefixes as said second prefixes to home agent of said mobile node; and
a third prefix assigning step of generating a plurality of second prefixes by extending length of said first prefix using said assigned prefix as said first prefix, carrying out mapping to a third prefix having the same length as that of said first prefix each of said generated plurality of second prefixes, and selectively assigning said mapped plurality of third prefixes to said plurality of interfaces; and
further, a step of selecting one of said first, said second, and said third prefix assigning steps.

Further, to attain the object as described above, the invention provides a prefix assigning system, wherein said system comprises at least two of the following prefix assigning steps:

a first prefix assigning unit for extending length of first prefix by using said assigned prefix as said first prefix, for generating a plurality of second prefixes to be assigned to each of said plurality of interfaces, and for selectively assigning said generated plurality of second prefixes to said plurality of interfaces;
a second prefix assigning unit for notifying number of said interfaces to said external domain from said mobile node, selectively assigning said external domain to a plurality of first prefixes as many as said notified interfaces to said plurality of interfaces, and said mobile node transmits a message for binding of said second prefix and home address of said mobile node to home agent of said mobile node by using common portion of said plurality of first prefixes as said second prefixes;
a third prefix assigning unit for generating a plurality of second prefixes by extending length of first prefix by using said assigned prefixes as said first prefixes, carrying out the mapping to a third prefix having the same length as that of said first prefix each of said generated plurality of second prefixes, and for selectively assigning said mapped plurality of third prefixes to said plurality of interfaces; and

further, there is provided unit for selecting one of said first, said second, and said third prefix assigning unit.

With the arrangement as described above, it is possible to decrease the number of the binding update messages and to reduce the packet size even when prefix length to be assigned to the mobile node is restricted.

Also, according to the invention, it is possible to decrease the number of the binding update messages and to reduce the packet size even when a plurality of prefixes are assigned to a mobile node, which has a plurality of interfaces.

BRIEF DESCRIPTION OF THE DRAWINGS

Fig. 1 is a schematical block diagram to functionally show an arrangement of a mobile node in a first embodiment of the invention:
Fig. 2 is a schematical drawing to show a communication system, to which the present invention is applied;
Fig. 3A is a schematical drawing to explain an original prefix and a lower-level prefix in the first embodiment of the invention, and a space of the original prefix and a space of the lower-level prefix are shown in the figure;
Fig. 3B is a schematical drawing to explain the original prefix and the lower-level prefix in the first embodiment of the invention, and the drawing shows actual number of bits (prefix length) of each of the original prefix and the lower-level prefix;
Fig. 4 is a schematical drawing to show general outline of a communication sequence in the first embodiment of the invention;
Fig. 5 is a schematical drawing to explain the communication sequence of Fig. 4;
Fig. 6 is a schematical drawing to explain another example of the original prefix and the lower-level prefix in the first embodiment of the invention;
Fig. 7 is a schematical drawing to explain a space of each of the original prefix and the lower-level prefix in Fig. 6;
Fig. 8 is a schematical drawing to explain general outline of a communication sequence in the variation example of the first embodiment of the invention;
Fig. 9 shows general outline of a communication sequence in another variation example of the first embodiment of the invention;
Fig. 10 is a schematical drawing to show the original prefix and the lower-level prefix in still another variation example of the first embodiment of the invention;
Fig. 11 is a schematical drawing to show original prefixes and upper-level prefixes in a second embodiment of the invention;
Fig. 12 is a schematical drawing to explain original prefixes and lower-level prefixes in a third embodiment of the invention;
Fig. 13 is a schematical drawing to explain problems to be solved by the invention; and
Fig. 14 is another schematical drawing to explain problems to be solved by the invention.

DESCRIPTION OF EMBODIMENTS

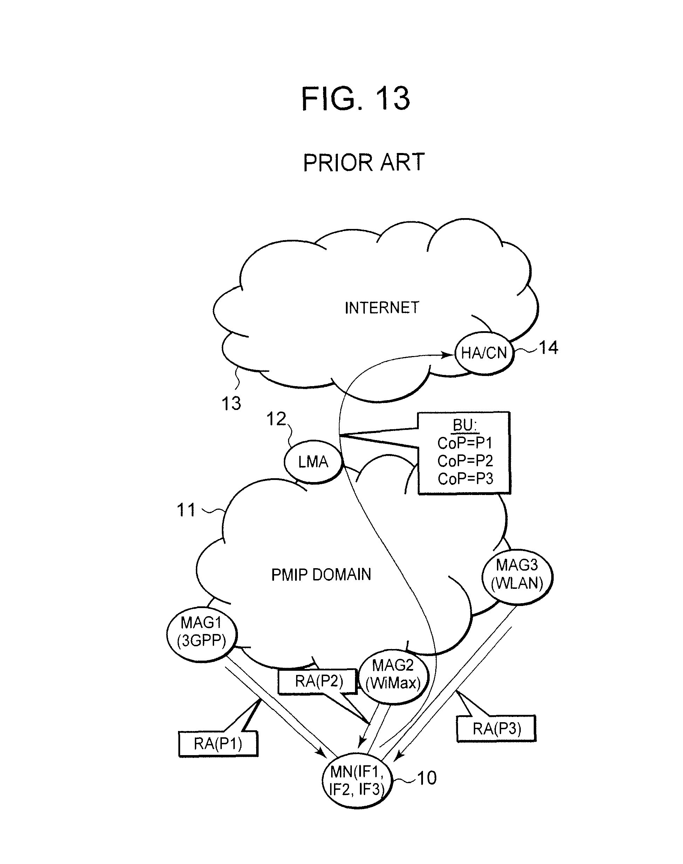

Referring to Fig. 13, description will be given below on problems to be solved in the embodiments of the invention. As an assumption, MN 10 is positioned in an external PMIP domain 11, which is other than its home domain. MN 10 has a 3GPP interface IF1, a WiMAX interface IF2, and a WLAN interface IF3. Prefixes P1, P2 and P3 are assigned in RA messages from MAG 1 of 3GPP, MAG 2 of WiMAX, and MAG 3 of WLAN to the interfaces IF1, IF2 and IF3 respectively. In this case, when BU messages are transmitted to the prefixes P1, P2 and P3 respectively in order to bind the prefixes P1, P2 and P3 to HoA of MN 10 as care-of prefix (CoP) to HA and/or CN (HA/CN 14) within home domain of its own from MN 10 via LMA 12 of PMIP domain 11 and via internet 13, a problem arises that the number of messages is increased. Also, when a bulk BU message including all of the prefixes P1, P2 and P3 are transmitted, a problem arises that the packet size is increased. The types of access network, to which each of the interfaces is connected, is not limited to the types as described above.

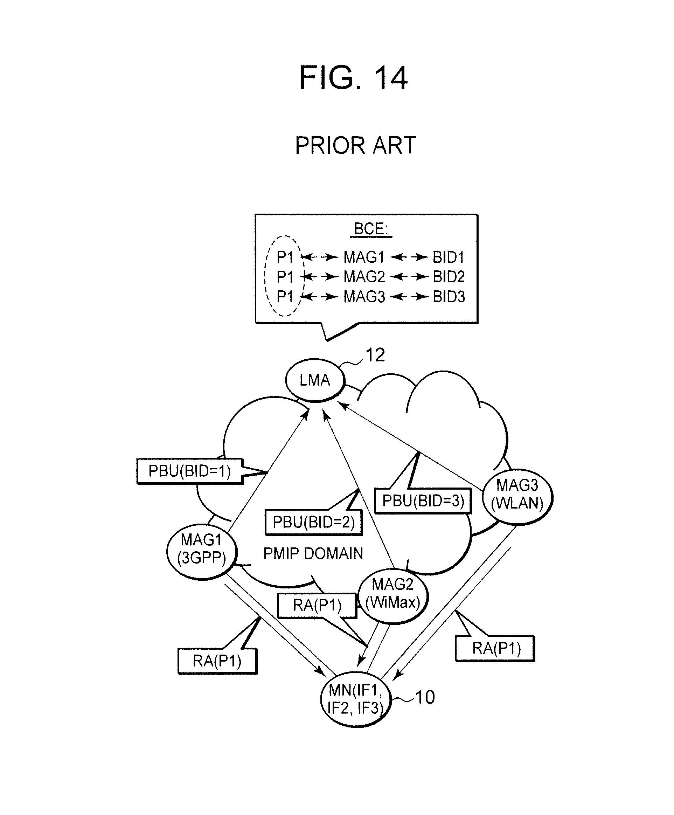

Fig. 14 shows a method to solve the problems as described above. In Fig. 14, one common prefix P1 is assigned to the interfaces IF1, IF2 and IF3 by an RA message from MAG 1, MAG 2 and MAG 3 respectively. In this case, only the prefix P1 is used as a care-of prefix (CoP) to HoA of MN 10. Therefore, the number of the BU message is one, and the packet size is not increased. However, in case LMA 12 receives a packet destined to the prefix P1 from HA/CN 14 for the purpose of identifying (differentiating) as to which of MAG 1, MAG 2 or MAG 3 the routing should be made, it is necessary to generate binding cache entry (BCE) to associate binding identifiers BID's =1,2 and 3 with MAG 1, MAG 2 and MAG 3 respectively by PBU message transfered from MAG 1, MAG 2 or MAG 3 in advance.

In the embodiment of the present invention, for the purpose of reducing the number of BU messages and packet size, a mobile node (MN), which is roaming in a local mobility management (LMM) domain performs binding of its own home address (HoA) to all of the original external prefixes (hereinafter, it is referred as "original prefix or "care-of prefix" or "CoP") assigned by the LMM domain. Instead of describing a plurality of care-of addresses (CoA) to the BU messages, MN decreases the number of the BU messages and reduces the packet size by describing only one original prefix. This means that all addresses constituted by one original prefix are treated as CoA to HoA of MN. The home agent (HA) of MN and the correspondent node (CN) may transfer the packet destined to HoA of MN to the address constituted by the original prefix. In this case, this can be applied to rules and policies of filtering to select CoA to a specific data flow.

In the Non-Patent Document 2 of the prior art, it is described that one prefix is assigned to MN. However, when a plurality of interfaces of MN is connected to the same LMM domain, if one prefix is used, network operation becomes more complicated. For instance, when each mobile access gateway (MAG) transmits a PBU message for the prefix of the same MN to a local mobility anchor (LMA), a problem arises that a certain PBU message overwrites the registration of other PBU message at LMA. For preventing the complicacy such as overwriting, it is necessary to synchronize each MAG by assigning different binding identifier (BID) as shown in Fig. 14, for instance. In addition, because all connected interfaces are assigned with the same prefix, it is not useful for LMA that the packet is sent to the MN by the prefix-based routing. Therefore, at LMA, the preference of each MN on the routing must be explicitly set, e.g. as to which interface a packet from a flow should be sent by routing.

<Relation between the original prefix and interface-assigned prefix>

According to the present invention, different prefixes are assigned to each of the interfaces connected during the time when MN is roaming in the LMM domain where a plurality of interfaces of MN is connected. In order to the decrease the number of the BU messages and the packet size, MN uses one prefix (hereinafter referred as "original prefix") as CoP.

First, a relation between the original prefix and the prefix to be assigned to each of the interfaces of MN is established. In a first preferred embodiment, the original prefix is assigned to the interface of MN, which is connected first to the LMM domain, and a BU message including only the original prefix is transmitted. Next, from the original prefix, a plurality of prefixes each having longer prefix length (hereinafter referred as "lower-level prefixes") are generated, and these are assigned to the interface of MN connected to the next LMM domain. In a second preferred embodiment, the original prefix having continuous LMM domain are assigned to each of the interfaces. From the continuous original prefixes, prefixes (hereinafter referred as "upper-level prefix") with shorter prefix length, which is a common portion, is generated, and MN transmits the BU message, which contains only the upper-level prefixes. In a third preferred embodiment, MN requests the assignment of the original prefix to the LMM domain, and a range of a plurality of prefixes branched from the original prefix is mapping to the prefixes, which are actually assigned to each of the interfaces of MN (i.e. the prefixes already assigned). Here, the shorter prefix means a larger address space. On the contrary, a longer prefix means a smaller address space.

<The arrangement of MN>

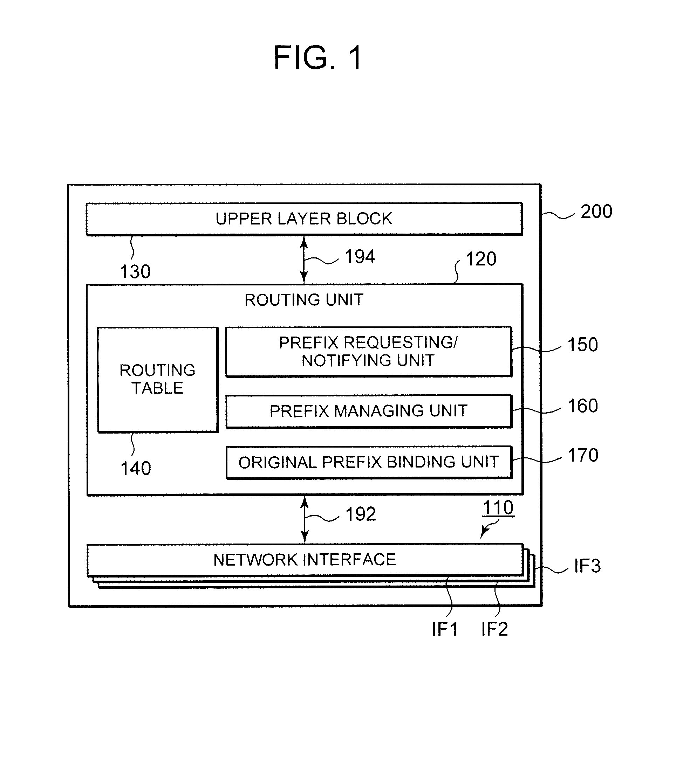

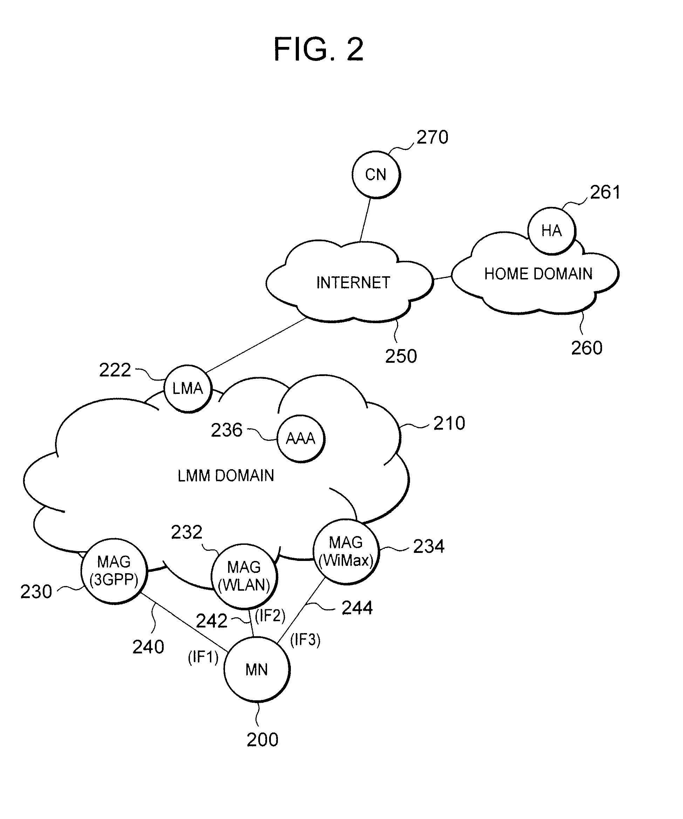

Fig. 1 is a block diagram to functionally show an arrangement of MN 200. MN 200 comprises a plurality of network interfaces (hereinafter simply referred as "interfaces") 100, the interfaces IF1, IF2 and IF3 as to be described later, a routing unit 120, and an upper-layer block 130. The interfaces 100 transmit and receive packets to and from a network such as an LMM domain 210 or a home domain 260 as shown in Fig. 2. The routing unit 120 executes a related program within MN 200 or decision of transfer of the packet to an adequate interface 100. The upper-layer block 130 executes all protocols and programs on upper-level higher than the network layer. As MN 200, a UE (User Equipment) may be assumed, which has a 3GPP (Third Generation Partnership Project) interface, and a non-3GPP interface (WLAN interface or WiMAX interface).

The interface 100 is a functional block, which executes all procedures of hardware and software as necessary so that MN 200 can perform communication with the other nodes via communication media. If special terms known in the related technical field are used, the interface 100 means a communication component of a layer 1 (physical layer) and a layer 2 (datalink layer), firmware, driver, and communication protocol.

The routing unit 120 is in charge of making all decisions as to whether the packet is to be transferred to the upper layer block 130 or to the interface 100. If the terms used in the related technical field are used, the routing unit 120 carries out a layer 3 (network layer) protocol, e.g. IPv4 or IPv6. The routing unit 120 can receive the packet from the interfaces IF1, IF2 or IF3 as appropriate of the interface 100 and can transfer the packet to the interfaces IF1, IF2 or IF3 as appropriate via signal/data path 192. Similarly, the routing unit 120 can receive the packet from an appropriate program in the upper layer block 130 or can transfer the packet to a program as appropriate via a signal/data path 194.

The upper layer block 130 executes all protocols and programs higher than the network layer in the communication stack. These protocols and programs include: protocols of transport layer or session layer such as TCP (Transmission Control Protocol), SCTP (Stream Control Transport Protocol), or UDP (User Datagram Protocol), and the programs and the software necessary for performing communication with the other nodes. The packets can be transferred between the routing unit 120 and the upper layer block 130 via the signal/data path 194.

The routing unit 120 has a routing table 140, a prefix requesting/notifying unit 150, a prefix managing unit 160, and an original prefix binding unit 170. The routing table 140 has a routing entry to instruct the routing unit 120 as to how routing should be made for the packets, and it gives instruction as to which of the interfaces the packet should be transferred according to parameters of the packet, i.e. (source address and destination address). The prefix requesting/ notifying unit 150, the prefix managing unit 160, and the original prefix binding unit 170 make up a core of the present invention. The prefix requesting/ notifying unit 150 requests the original prefix to the network domain and notifies the relation between the original prefix and the lower level prefix to be assigned to the interfaces IF1, IF2 and IF3 of MN 200 to the network domain. The prefix managing unit 160 manages the relation between the original prefix and the lower-level prefix to be assigned to the interfaces IF1, IF2 and IF3 of MN. The original prefix binding unit 170 is provided with the function of the mobile IP, and it transmits the BU message to HA of MN and CN and binds HoA of MN with the original prefix.

<The arrangement of Network>

Fig. 2 shows an arrangement of a network where the present invention is applied, and MN 200 is roaming in an external LMM domain 210 different from the home domain 260 where HA 261 of MN 200 is present. MN 200 assumes that communication is performed to and from CN 270 via the LMM domain 210, the Internet 250 and HA 261 in the home domain 260. As the LMM domain 210, 3GPP core network can be assumed. The LMM domain 210 has a local mobility anchor (LMA) 222, a MAG which is a mobile anchor gateway (3GPP) 230, a MAG (WLAN) 232, a MAG (WiMAX) 234, and an AAA server 236. The MAG (3GPP) 230 is a 3GPP access router, e.g. it is S-GW (Serving Gateway) or eNodeB (evolved Node-B). The MAG (WLAN) 232 is a WLAN (Wireless Local Area Network) access router, e.g. it is ePDG (evolved Packet Data Gateway) of "Untrusted WLAN connection/Untrusted Non-3GPP network". The MAG (WiMAX) 234 is a WiMAX access router. For instance, it is an AGW (Access Gateway) of trusted WiMAX access (Trusted WiMAX access/Trusted Non-3GPP network) or AR (Access Router) or ePDG.

LMA 222 is a PDN gateway (Packet Data Network Gateway) of 3GPP core network. When the UE is connected to the 3GPP core network via 3GPP interface or Non-3GPP interface, a connection called "PDN connection" is established between the PDN gateway and the UE, and the prefix used by the UE is assigned to each PDN connection. MN 200 has a 3GPP interface IF1, a WLAN interface IF2, and a WiMAX interface IF3 connected with MAG 230, MAG 232 and MAG 234 respectively when power supply of the interfaces is on.

<The first embodiment: Extension of prefix length>

As described above, in order that MN 200 transmits a minimum BU message to HA 261 or CN 270, MN 200 requests the prefix to an AAA server 236 in the LMM domain 210, extends the length of the received prefix (the original prefix), generates a lower-level prefix to be assigned to the interfaces IF1, IF2 and IF3 respectively, and establishes the relation between the original prefix P1 and the lower- level prefix. In the first embodiment, the LMM domain 210 (LMA 222) assigns the original prefix to the interface where MN 200 is connected first to the LMM domain 210 according to a request of MN 200. Further, it extends the length of the original prefix, generates a plurality of lower-level prefixes each having a longer prefix length, and assigns the prefix to the other interfaces.

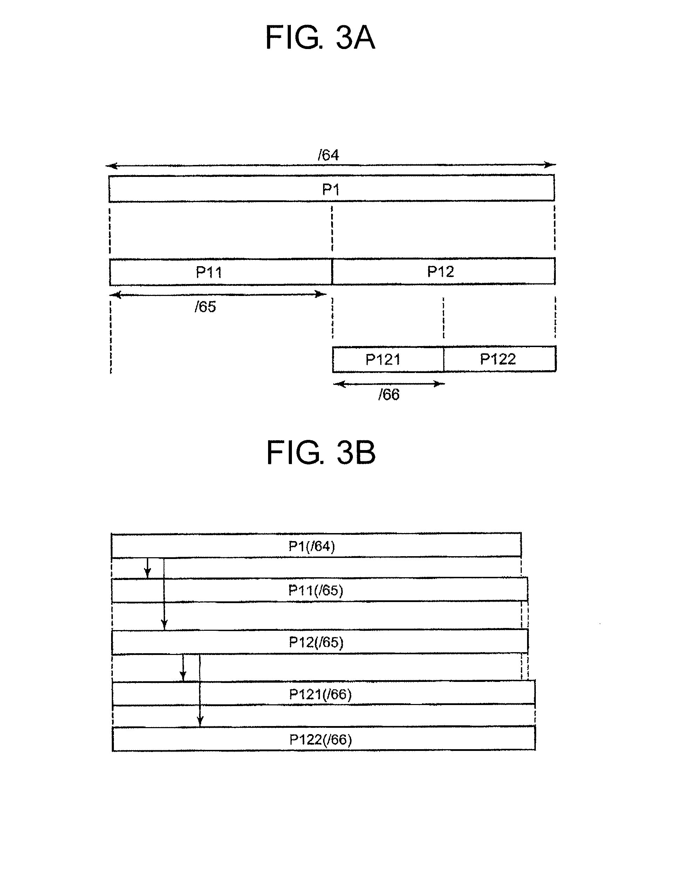

Fig. 3A is a schematical drawing to show a space of the original prefix and the lower-level prefix. Fig. 3B shows the actual number of bits (prefix length) of the original prefix and the lower-level prefix. In Fig. 3A and Fig. 3B, when the length of the original prefix P1 of 64 bits is extended by one bit, lower-level prefixes P11 and P12, which have 65 bits respectively, can be generated. The lower-level prefixes P11 and P12 are continuous in the space of 65 bits. When the length of the lower-level prefix P12 of 65 bits is extended by one bit, lower-level prefixes P121 and P122 with 66 bits respectively can be generated. The lower-level prefixes P121 and P122 are continuous to each other in the space of 66 bits.

The length of the original prefix P1 may be shorter than 64 bits or may be longer than 64 bits. For instance, in case the original prefix P1 has 48 bits, the lower-level prefixes P11 and P12 extended by one bit have the prefix of 49 bits respectively. The number of bits to extend the original prefix P1 is not limited to one bit, and it may be any number of bits as desired. For instance, the prefix of 48 bits may be assigned as the original prefix, and the prefix of 64 bits extended from the prefix of 48 bits may be assigned as the lower-level prefix.

When only the 3GPP interface IF1 is attached to the MAG (3GPP) 230 via a link 240, the prefix of 64 bits thus received is assigned to the 3GPP interface IF1 as the original prefix P1 by MN 200. The original prefix binding unit 170 can transmit a BU message to bind HoA of MN 200 to the original prefix P1 to HA 261 or CN 270. MN 200 may explicitly request the assignment of the original prefix when IF1 is connected to MAG 230.

When the interface of MN 200 can be divided to two interfaces, i.e. the 3GPP interface IF1 and the other interfaces (Non-3GPP interface: the WLAN interface IF2 or the WiMAX interface IF3), MN 200 may use the prefix assigned when the 3GPP interface IF1 is connected to the 3GPP network as the original prefix P1, and may request for assigning the lower-layer prefix generated by extending the original prefix P1 to the Non-3GPP interface to the LMM domain 210 (LMA 222). To request the assignment of the lower-layer prefix, a method to request in the attachment procedure when the 3GPP interface IF1 is connected to the 3GPP network or a method to request when an RS (Route Solicitation) message to request the transmission of RA message including prefix may be transmitted. When an interface, which is connected first to the LMM domain 210 (LMA 222) is a Non-3GPP interface, the assignment of the lower-level prefix may be requested in the attachment procedure with AGW or IKEv2 performed with ePDG. Also, after the connection with ePDG or AGW has been established, information to request the assignment of the lower-level prefix may be included in the BU (Binding Update) message to be transmitted to the PDN gateway.

Also, when the 3GPP interface IF1 of MN 200 is connected to the 3GPP network and the prefix is assigned to MN 200, information that the assigned prefix can be used as the original prefix P1, and that the extension to the lower-level prefix is possible, may be explicitly notified to MN 200. In case this information is received, MN 200 extends the prefix P1 when the WLAN interface IF2 is connected to the link 242 as to be described later, MN 200 makes decision on the execution of the processing to generate the lower-level prefix.

In this case, the LMM domain 210 can select the prefix, which can offer the lower-level prefix to a plurality of interfaces of MN 200 as the original prefixes, and assign these prefixes to MN 200. Also, after confirming whether it is MN 200 or not, for which the use of the lower-level prefix with the extended original prefix is allowed, the original prefix can be assigned. The prefix, to which the lower-level prefix can be offered, is a prefix not overlapped on the prefix, which is assigned to other MN even if the prefix length is extended.

Thereafter, when the WLAN interface IF2 of MN 200 is attached to the MAG (WLAN) 232 via the link 242, the prefix managing unit 160 extends the length of the original prefix P1 of 64 bits, and the lower-level prefixes P11 and P12 with 65 bits are generated. Further, the prefix requesting/notifying unit 150 requests the LMM domain 210 so that the prefix P1 received first is treated as the original prefix P1, so that the lower-level prefix P11 is re-assigned to the 3GPP interface IF1 by notifying the lower-level prefixes P11 and P12 to the LMM domain 210, and so that the lower-level prefix P12 is assigned to the WLAN interface IF2. When it is notified that the prefix P1 assigned when the 3GPP interface of MN 200 is attached can be used as the original prefix, the prefix P1 may not be notified to the LMM domain 210. Also, when MN 200 and the LMM domain 210 can recognize that the prefixes to be used as the lower-level prefixes are P11 and P12, information (such as flag) to indicate the use of P11 and P12 may be notified instead of notification of value of P11 and P12.

In case attached network of the WLAN interface IF2 is a Non-3GPP network, P12 may be notified during the attachment procedure with AGW or IKEv2 performed with ePDG, and the assignment of P12 may be requested. Also, after the attachment to ePDG or AGW has been established, P12 may be included in the BU (Binding Update) message to be transmitted to a PDN gateway, and the assignment of P12 may be requested.

Thereafter, when the WiMAX interface IF3 of MN 200 is attached to the MAG (WiMAX) 234 via a link 244, the prefix managing unit 160 extends the length of the lower-level prefix P12 of 65 bits and generates the lower-level prefixes P121 and P122 of 66 bits each. The prefix requesting/notifying unit 150 notifies these lower-level prefixes P121 and P122 to the LMM domain 210, and requests the assignment of the lower-level prefix P122 to the WiMAX interface IF3 so that the lower-level prefix P121 is to be re-assigned to the WLAN interface IF2. P11 assigned to the 3GPP interface IF1 may be used as the lower-level prefix to be extended.

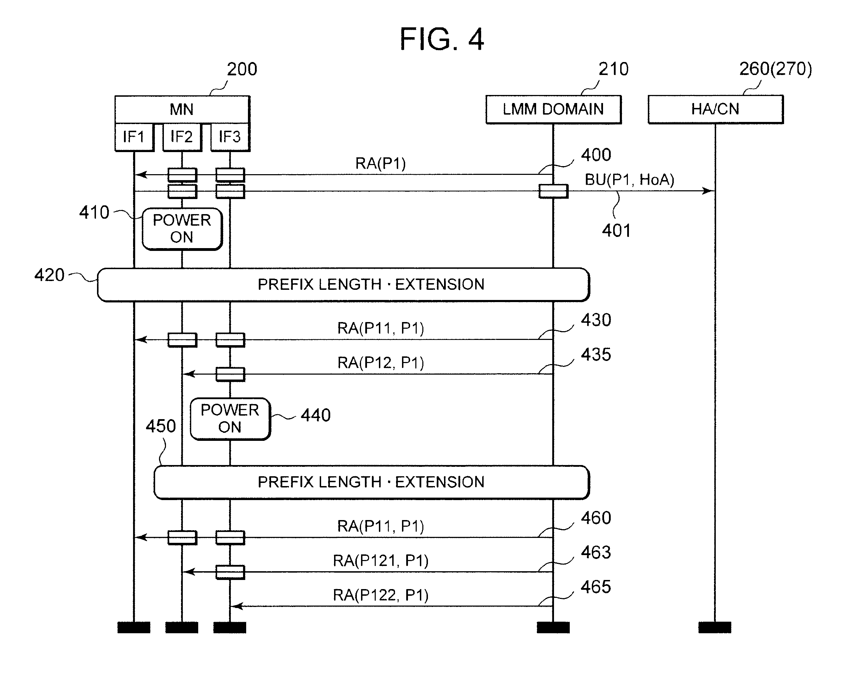

Fig. 4 is a schematical drawing to show general outline of a message sequence to establish the relationship between the original prefix and the lower-level prefix in the first embodiment. When power is turned on at the 3GPP interface IF1 at first and it is attached to the MAG (3GPP) 230, the prefix P1 is assigned by a router advertisement (RA) message from the LMM domain 210. MN 200 recognizes this prefix P1 assigned first as the original prefix. Then, MN 200 transmits a BU message 401 to request the binding of the original prefix P1 with HoA of MN 200 to HA 260 and/or CN 270.

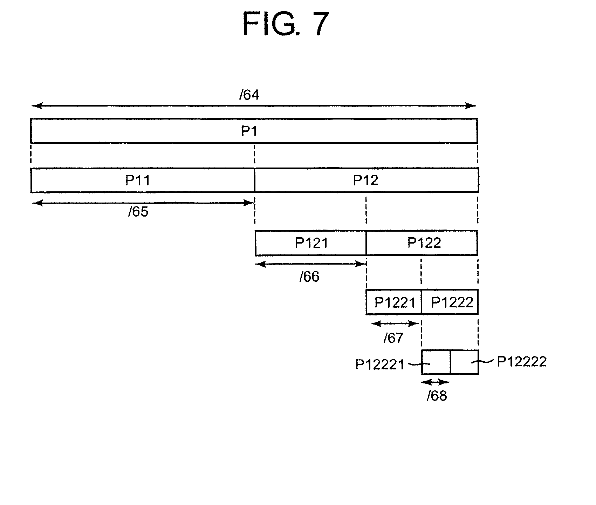

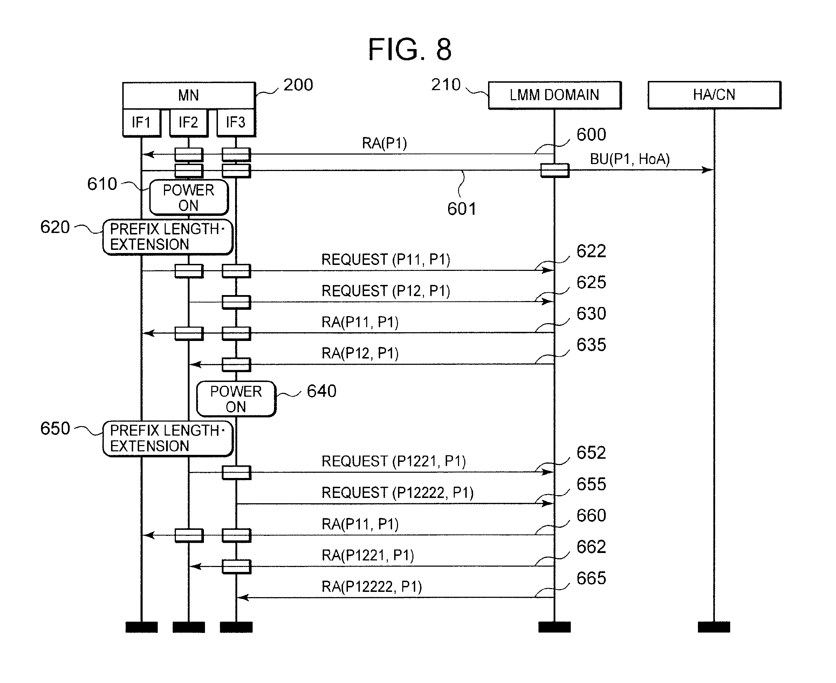

Next, when power is turned on at the WLAN interface IF2 of MN 200 (410 in the figure), MN 200 extends the length of the original prefix P1 and generates the lower-level prefixes P11 and P12, and the prefixes P1, P11 and P12 are notified to the LMM domain 210 (processing of prefix length - extension 420 in the figure). In this case, instead of extension of the length of the original prefix P1 by MN 200, as shown in the second embodiment, MN 200 may request the LMM domain 210 to extend the length of the original prefix P1 (see Fig. 7 and Fig. 8). In any of these cases, after processing of the prefix length - extension 420, the extended lower-level prefix P11 is assigned to the 3GPP interface IF1 by an RA message 430 from the LMM domain 210, and the extended lower-level prefix P12 is assigned to the WLAN interface IF2 by an RA message 435. In this case, the original prefix P1 remains unchanged, and MN 200 has no need to transmit a BU message to HA 260 and/or CN 270 to request to newly perform the binding of the lower-level prefixes P11 and P12 to HoA of MN 200.

Then, when power is turned on at the WiMAX interface IF3 of MN 200 (440 in the figure), the length of the lower-level prefix P12 of 65 bits is extended, and the lower-level prefixes P121 and P122 of 66 bits each are generated. Then, the prefixes P1, P121, and P122 are notified to the LMM domain 210 (processing of prefix length • extension 450 in the figure). In this case, too, MN 200 may request the extension of the length of the lower-level prefix P12 to the LMM domain 210 similarly in the second embodiment instead of extending the length of the lower-level prefix P12. In any of these cases, after the processing of prefix length • extension 450, the lower-level prefix P11 is assigned to the to the 3GPP interface IF1 by an RA message 460 from the LMM domain 210, and the lower-level prefix P121 is assigned to the WLAN interface IF2 by an RA message 463, and the lower-level prefix P122 is assigned by an RA message 465. In this case, also, the original prefix P1 remains unchanged, and MN 200 has no need to transmit a BU message to HA 260 and/or CN 270 to request to newly perform the binding of the lower-level prefixes P11, P121, and P122 to HoA of MN 200.

As described above, MN 200 transmits only the BU message including the original prefix P1 to HA 260 and/or CN 270 and has no need to transmit the BU message including the lower-level prefixes P11, P121 and P122. As a result, the number of the BU message can be decreased and packet size can be reduced.

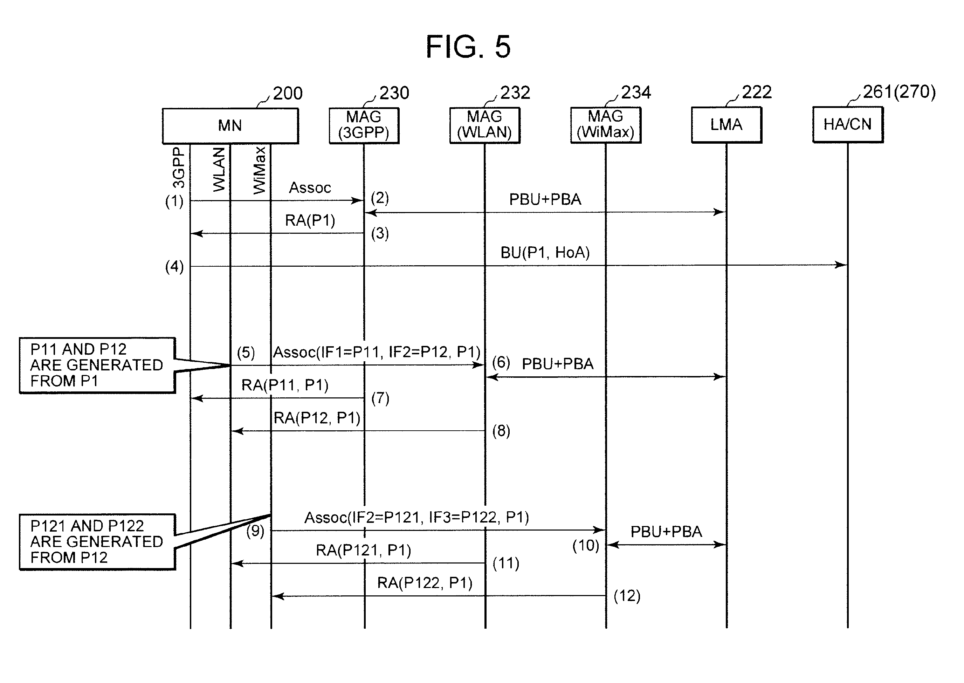

Fig. 5 shows the message sequence in detail.

(1) First, power is turned on at the 3GPP interface IF1 of MN 200, and it is attached and associated with MAG (3GPP) 230.
(2) From the MAG (3GPP) 230 to the LMA 222, a PBU message is transmitted to request the binding of HoA of MN 200 to the address of the MAG (3GPP) 230, and a PBA message is transmitted from the LMA 222 to the MAG (3GPP) 230 as a reply.
(3) Next, from the MAG (3GPP) 230 to the 3GPP interface IF1 of MN 200, an RA message including the original prefix P1 is transmitted, and the prefix P1 is assigned to the 3GPP interface IF1.

(4) Next, MN 200 transmits a BU message to HA 260 and/or CN 270 from the 3GPP interface IF1 to request the binding of the original prefix P1 to HoA of MN 200. By the binding of the PBU message as described in (2) above, this BU message is encapsulated and is sent to the LMA 222 by the MAG (3GPP) 230. Then, it is decapsulated at the LMA 222 and is transmitted to HA 260 and/or CN 270. By the binding of the PBU message and the BU message as described in (2) and (4) above, the packet destined to the original prefix P1 of MN 200 from HA 260 and/or CN 270 is transmitted to the 3GPP interface IF1 from the LMA 222 via the MAG (3GPP) 230.

(5) Next, when power is turned on at the WLAN interface IF2 of MN 200 and it is attached to the MAG (WLAN) 232 and is associated with it, MN 200 extends the length of the original prefix P1 and generates lower-level prefixes P11 and P12, and the prefixes P1, P11, and P12 are notified to the MAG (WLAN) 232.
(6) From the MAG (WLAN) 232 to the LMA 222, a PBU message is transmitted to request the binding of the lower-level prefixes P11 and P12 to the addresses of the MAG (3GPP) 230 and the MAG (WLAN) 232 respectively, and a PBA message is transmitted from the LMA 222 to the MAG (WLAN) 232 as a reply.
(7) Next, from the MAG (3GPP) 230 to the 3GPP interface IF1 of MN 200, an RA message including the lower-level prefix P11 and the original prefix P1 is transmitted, and the lower-level prefix P11 is assigned to the 3GPP interface IF1.
(8) Further, from the MAG (WLAN) 232 to the WLAN interface IF2 of MN 200, an RA message including the lower-level prefix P12 and the original prefix P1 is transmitted, and the lower-level prefix P12 is assigned to the WLAN interface IF2.

By the binding of the BU message and the PBU message as described in (4) and (6) above, the packet destined to the original prefix P1 of MN 200 from HA 260 and/or CN 270 is transmitted to the 3GPP interface IF1 or the WLAN interface IF2 from the LMA 222 to the MAG (3GPP) 230 or the MAG (WLAN) 232.
(9) Next, when power is turned on at the WiMAX interface IF3 of MN 200, and it is attached to the MAG (WiMAX) 234 and is associated with it, the length of the lower-level prefix P12 is extended, and the lower-level prefixes P121 and P122 are generated. Then, the prefixes P1, P121 and P122 are notified to the MAG (WiMAX) 234.
(10) From the MAG (WiMAX) 234 to the LMA 222, a PBU message is transmitted to perform the binding of the lower-level prefixes P121 and P122 to the address of the MAG (WLAN) 232 and the MAG (WiMAX) 234 respectively, and a PBA message is transmitted from LMA 222 to the MAG (WiMAX) 234 as a reply.

(11) Next, from the MAG (WLAN) 232 to the WLAN interface IF2 of MN 200, an RA message including the lower-level prefix P121 and the original prefix P1 is transmitted, and the lower-level prefix P121 is assigned to the WLAN interface IF2.

(12) Further, from the MAG (WiMAX) 234 to the WiMAX interface IF3 of MN 200, an RA message including the lower-level prefix P122 and the original prefix P1 is transmitted, and the lower-level prefix P122 is assigned to the WiMAX interface IF3.

By the binding of the BU message and the PBU message as described in (4) and (10) above, the packet destined to the original prefix P1 of MN 200 from HA 260 and/or CN 270 is transmitted to the 3GPP interface IF1 or the WLAN interface IF2 or the WiMAX interface IF3 via from LMA 222 to the MAG (3GPP) 230 or the MAG (WLAN) 232 or the MAG (WiMAX) 234.

<Routing by the lower-level prefix length>

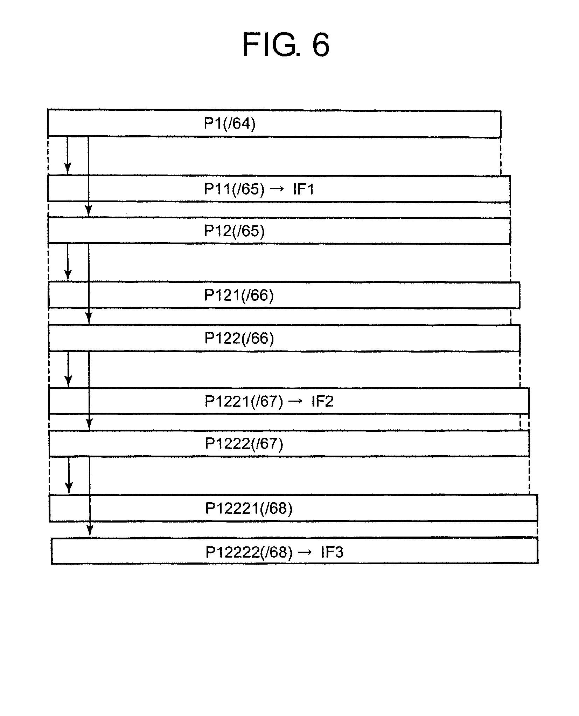

By the lower-level prefix length extended from the length of the original prefix P1, it is possible to implicitly indicate distribution ratio of the routing to the interfaces IF1 to IF3. Description will be given below by referring to Fig. 6 and Fig. 7. First, as shown in Fig. 6, the length of the original prefix P1 of 64 bits is extended by one bit, and the lower-level prefixes P11 and P12 of 65 bits each are generated, and the lower-level prefix P11 is assigned to the 3GPP interface IF1. The lower-level prefixes P11 and P12 are continuous to each other in the space of 65 bits as shown in Fig. 7.

Further, the length of the lower-level prefix P12 of 65 bits is extended by one bit as shown in Fig. 6, and the lower-level prefixes P121 and P122 each with 66 bits are generated. The lower-level prefixes P121 and P122 are continuous to each other in the space of 66 bits as shown in Fig. 7. In this case, the lower-level prefixes P121 and P122 are not yet assigned to the interfaces IF2 and IF3. Further, the length of the lower-level prefix P122 of 66 bits is extended by one bit and lower-level prefixes P1221 and P1222 each with 67 bits are generated, and the lower-level prefix P1221 is assigned to the WLAN interface IF2. The lower-level prefixes P1221 and P1222 are continuous to each other in the space of 67 bits as shown in Fig. 7. Further, the length of the lower-level prefix P1222 of 67 bits is extended by one bit, and lower-level prefixes P12221 and P12222 each with 68 bits are generated, and the lower-level prefix P12222 is assigned to the WiMAX interface IF3. The lower-level prefixes P12221 and P12222 are continuous to each other in the space of 68 bits as shown in Fig. 7.

According to this method to extend the prefix length, the prefix length to be assigned to the 3GPP interface IF1 is 65 bits, the prefix length to be assigned to the WLAN interface IF2 is 67 bits, and the prefix length to be assigned to the WiMAX interface IF3 is 68 bits. As a result, the ratio of the range of addresses to be assigned to the interfaces IF1 to IF3 can be expressed by the ratio of packets, which are distributed by routing to the interfaces IF1 to IF3. In the present case, IF1: IF2: IF3 = 8: 2: 1. This means that, even when routing destinations IF1 to IF3 of the packets are not clearly specified, it means that 8 packets out of 12 packets are sent by the routing to IF1, and 2 packets out of 12 packets are sent to IF2, and one packet out of 12 packets is sent by the routing to IF3.

Here, all addresses in the space of the original prefix P1 are not assigned to the interfaces IF1, IF2 and IF3, and only the lower-level prefixes P11, P1221 and P12222 are assigned respectively. In case the interface IF1 is connected to the MAG (3GPP) 230, the interface IF2 is connected to the MAG (WLAN) 232, and the interface IF3 is connected to the MAG (WiMAX) 234, the LMA 222 has the following routing entries from proxy binding cache:

- The packet destined to the lower-level prefix P11 is sent via the MAG (3GPP) 230 by routing.
- The packets destined to the lower-level prefix P1221 are sent via the MAG (WLAN) 232 by routing.
- The packets destined to the lower-level prefix P12222 are sent via the MAG (WiMAX) 234 by routing.

At the LMA 222, there is no entry of packets destined to the lower-level prefixes P121 and P12221, but the LMA222 can send the packets destined to the lower-level prefixes P121 and P12221 via either of the MAG 230, the MAG 232 or the MAG 234 by routing. In this case, the preference of the routing as described above becomes effective. In the original prefix P1, for the packet with the destination not matching the routing entry as drawn out from the binding cache of LMA 222, routing is performed through load balancing with weighting between active interfaces of MN 200. The weighting to be used in the load balancing is determined by prefix length assigned to each of the interfaces IF1, IF2 and IF3 of MN 200 as described above.

Fig. 8 is a schematical drawing to show message sequence when MN 200 establishes the relation of the original prefix P1 and the lower-level prefixes assigned to the interfaces IF1 to IF3 so that the wishing on the routing of MN 200 will be given to the LMM domain 210. First, to the interface IF1, the prefix P1 is assigned by an RA message 600 including the prefix P1. Also, MN 200 transmits a BU message 601 to HA 260 and/or CN 270 to request the binding of the original prefix P1 (the prefix P1 as assigned at first) to HoA of MN 200 as the original prefix.

Next, when power is turned on at the interface IF2 by MN 200, (processing 610 in the figure), the prefix managing unit 160 determines the use of the prefix P1 as the original prefix, and the length of the original prefix P1 is extended to the lower-level prefixes P11 and P12 (processing 620 in the figure). Next, the prefix requesting/notifying unit 150 notifies the extension of the prefix length by a request message 622 including the lower-level prefix P11 and the original prefix P1 and by a request message 625 including the lower-level prefix P21 and the original prefix P1 from the interfaces IF1 and IF2 to the LMM domain 210 (MAG 230 and MAG 232). When it is assumed that the LMM domain 210 agrees with the extension of the prefix length, the LMM domain 210 (MAG 230 and MAG 232) assigns the lower-level prefixes P11 and P12 to the interfaces IF1 and IF2 respectively by RA messages 630 and 635 respectively. In this case, the LMM domain 210 recognizes that the prefix P1 is the original prefix by sending the RA messages 630 and 635.

Next, when power is turned on at the interface IF3 by MN 200 (the processing 640 in the figure), the prefix managing unit 160 determines the change of the wish on the routing distribution ratio to the interfaces, and the length of the lower-level prefix P12 is divided to a lower-level prefix P1221 of 67 bits and a lower-level prefix P12222 of 68 bits (the processing 650 in the figure). The prefix requesting/notifying unit 150 notifies the extension of the prefix length by a request message 652 including the lower-level prefix P1221 and the original prefix P1, and by a request message 655 including the lower-level prefix P12222 and the original prefix P1 from the interfaces IF2 and IF3 to the LMM domain 210 (MAG 232 and MAG 234). This notification indicates that the wishes of routing distribution ratio to the interfaces IF1, IF2 and IF3 is in the ratio of 8 : 2 : 1. When the LMM domain 210 agrees with the request messages 652 and 655, the LMM domain 210 (MAG 230, MAG 232, and MAG 234) assigns the lower-level prefixes P11, P1221 and P12222 to the interfaces IF1, IF2 and IF3 respectively by the RA messages 660, 662 and 665. In this case, the LMM domain 210 recognizes that the prefix P1 is the original prefix by receiving the RA messages 660, 662 and 665.

In this case, the LMA 222 may not be able to find out the destination of the routing from the binding cache of the LMA 222 to the packet destined to the original prefix P1. However, the destination of address of the packet is within the space of the original prefix P1. In such case, the LMA 222 can carry out the routing of the packet of the destination address to any of the interfaces IF1, IF2 or IF3 according to the preference indicated by the routing distribution ratio of MN 200.

<Receiving of the packet destined to the prefix not assigned>

Now, description will be given below on a case where a packet, which has a destination address configured from a prefix not assigned to the interfaces IF1, IF2 and IF3, is received. For instance, a packet, which has the lower-level prefix P121 not assigned to the interfaces IF1, IF2 and IF3 as destination, may be transmitted to the interface IF1 where the prefix P12 is assigned. In this case, the routing unit 120 of MN 200 must accept the packet with destination address in the space of the original prefix P1 from the interface IF1. Similarly, the routing unit 120 of MN 200 can transmit the packet, in which an address in the space of the original prefix P1 is set as the source address, via the interfaces IF1, IF2 and IF3 connected to the LMM domain 210.

Similar functions are provided in MAG 230, MAG 232, and MAG 234. For instance, in case the 3GPP interface IF1 is connected to the MAG (3GPP) 230, the MAG (3GPP) 230 is advertising the lower-level prefix P11 in MN 200. In this case, the LMA 222 may select that a packet, which has the lower-level prefix P121 as destination address but is not assigned to the interface IF1, is transmitted to the interface IF1. This means that the MAG (3GPP) 230 transfers a packet, which has a prefix P121 different from the lower level prefix P11 in the advertisement, as destination address to MN 200. In the preferred first embodiment, the original prefix P1 assigned to MN 200 is notified to MAG 230, MAG 232 and MAG 234. In addition, MAG 230, MAG 232 and MAG 234 transfer the packet with destination address in the space of the original prefix P1 to MN 200. MAG 230, MAG 232 and MAG 234 also transfer the packet of the source address in the space of the original prefix P1 from MN 200 to the LMA 222.

<MAG according to the present invention and MAG not according to the present invention>

Now, description will be given below on a case where an MAG not provided with the functions of the present invention is disposed on the network. In the preferred first embodiment, MN 200 can make decision as to whether MAG 230, MAG 232 or MAG 234 gives permission to transfer the packet based on the original prefix P1 instead of the lower-level prefix assigned to the interface IF, and this includes the step where MAG 230, MAG 232 or MAG 234 makes decision as to whether a specific message to indicate that the packet can be transferred according to the original prefix P1 is to be advertised or not. Here, instead of the lower-level prefix assigned to the interfaces IF1, IF2 and IF3, MAG 230, MAG 232 and MAG 234 to permit packet transfer according to the original prefix P1 advertises a special message. This special message may be a special option embedded in an RA message or signaling of the layer 2. A method is known, according to which it is possible to give this special message in case an option to indicate the value of the original prefix P1 is included among the options including the lower-level prefixes assigned to the interfaces of MN 200 in the RA message. In Fig. 4 and Fig. 8, RA messages 430, 435, 460, 463, 465, 630, 635, 660, 662 and 665 include the value of the original prefix P1.

For this reason, when MN 200 refers to the original prefix P1 embedded in the RA messages 430, 435, 460, 463, 465, 630, 635, 660, 662 and 665, MN 200 recognizes that MAG 230, MAG 232 or MAG 234 gives permission to perform the routing based on the original prefix P1. When MAG 230, MAG 232 or MAG 234 gives permission on the routing based on the original prefix P1, MN 200 can transmit a packet, which has the original prefix P1 as source address, to MAG 230, MAG 232 or MAG 234 regardless of the lower-level prefix assigned to the interface IF in the RA messages 430, 435, 460, 463, 465, 630, 635, 660, 662 and 665. On the contrary, in case MN 200 does not refer to the original prefix P1 in the RA messages 430, 435, 460, 463, 465, 630, 635, 660, 662 and 665, MN 200 transmits the packet having the lower-level prefix assigned to the interfaces IF in the RA messages 430, 435, 460, 463, 465, 630, 635, 660, 662 and 665 as the source address to MAG 230, MAG 232 or MAG 234.

<Extension of the prefix length by LMA>

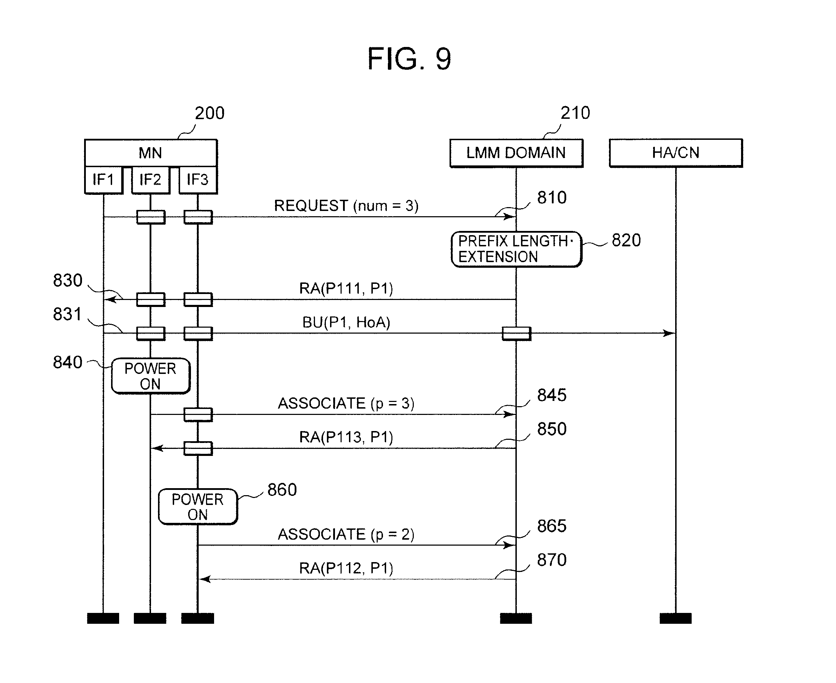

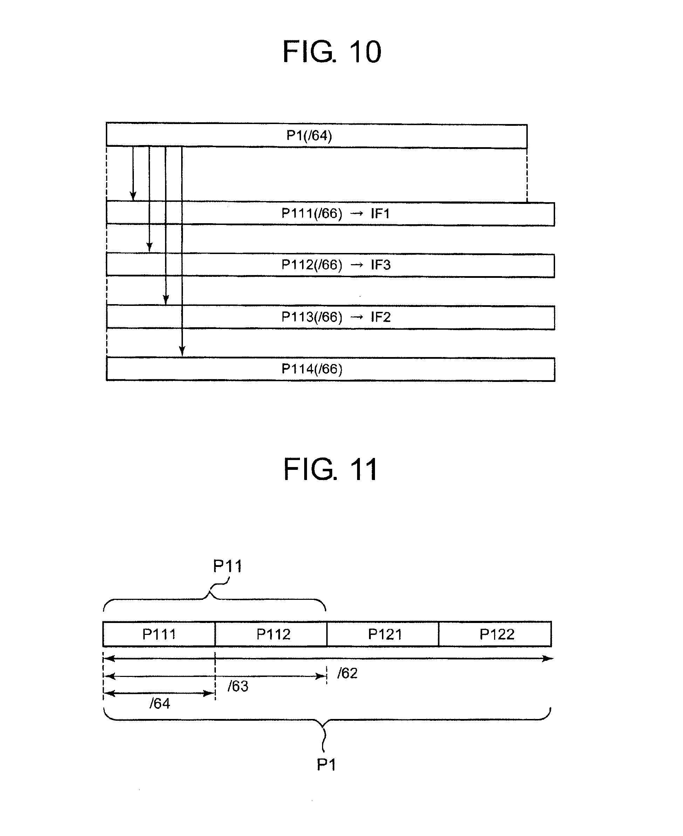

The message sequence shown in Fig. 8 indicates that MN 200 extends the length of the original prefix P1 and notifies the extension of the prefix length to the LMM domain 210, while MN 200 may entrust the extension of the prefix length with respect to the LMM domain 210 to the network side (LMA 222). Fig. 9 shows general outline of the message sequence in such case. Also, Fig. 10 shows that the LMA 222 extends the length of the original prefix P1 of 64 bits to lower-level prefixes P111, P112, P113 and P114 each with 66 bits. The lower-level prefixes P111, P112, P113 and P114 are continuous to each other in the space of 66 bits.

In Fig. 9, when the interface IF1 of MN 200 is first attached to the LMM domain 210 (MAG 230), MN 200 transmits a message 810 to request the prefix (the original prefix P1) to the LMM domain 210 (LMA 222). In this request message 810, MN 200 describes the number (num = 3) of the interfaces IF1, IF2 and IF3, which MN 200 has. The number of interfaces to be included in the request message 810 may be the number of the interfaces actually used by MN 200. That is, in case there are provided three interfaces but only two interfaces are actually used, the number of the interfaces will be 2. Instead of specifying the number of interfaces, in case the interfaces provided at MN 200 can be divided to the 3GPP interface IF1 and the other interfaces (i.e. two types of interfaces: Non-3GPP interfaces: WLAN interface IF2 or WiMAX interface IF3), MN 200 may request to the LMM domain 210 (LMA 222) that it may use the prefix assigned when the 3GPP interface IF1 is connected to the 3GPP network as the original prefix P1 and may request the LMM domain 210 (LMA 222) that the lower-level prefix generated by extending the original prefix P1 may be assigned to the Non-3GPP interface. In this case, no procedure is performed after the moment when power is turned on at the third interface IF3 (860 in Fig. 9).

As the methods to request the assignment of the lower-level prefixes, a method is known to request during the attachment procedure when the 3GPP interface IF1 is connected to the 3GPP network, or the request may be made when an RS (Router Solicitation) message to request the transmission of the RA message including the prefix is transmitted. If the interface, which has been connected first to the LMM domain (LMA 222), is a Non-3GPP interface, a request may be made during the procedure IKEv2 to be performed with ePDG, or a request may be made in the attachment procedure with AGW. Also, after the attachment with ePDG or AGW has been established, information to request the assignment of the lower-level prefixes may be included in a BU (Binding Update) message, which is to be transmitted to a PDN gateway.

Further, when the 3GPP interface IF1 of MN 200 is connected to the 3GPP network and the prefix is assigned to MN 200, information to indicate that the assigned prefix can be used as the original prefix P1, may be explicitly notified to MN 200. When this information is received, MN 200 recognizes that the lower-level prefix generated by extending the original prefix P1 is assigned in case the Non-3GPP interface is connected to the Non-3GPP network.

By the number of interfaces (num = 3), the LMA 222 can recognize as to how the length of the original prefix P1 is to be extended, and these are to be assigned to the interfaces IF1, If2 and IF3 of MN 200. In the present example, the original prefix P1 cannot be extended to the three longer lower-level prefixes, and the length of the original prefix P1 of 64 bits as shown in Fig. 9 is extended to the lower-level prefixes P111, P112, P113, and P114 (processing of prefix length • extension 820) of 66 bits. When the lower-level prefix of the original prefix P1 is requested as the prefix for the Non-3GPP interface, the original prefix P1 of 64 bits is extended to the lower-level prefixes P11 and P12 each with 65 bits.

After the processing of prefix length - extension 820, the LMA 222 assigns the lower-level prefix P111 to the interface IF1. This assignment is carried out by an RA message 830 to be transmitted to the interface IF1 from MAG 230, and the RA message 830 includes the original prefix P1 in addition to the lower-level prefix P111. MN 200 transmits a BU message 831 to HA 260 and/or CN 270 to request the binding of the original prefix P1 to HoA of MN 200.

Next, power is turned on (840 in the figure) at the interface IF2 of MN 200, and when the interface IF2 is attached to MAG 232, an associate message 845 is transmitted to the LMA 222. Then, the lower-level prefix P113 are assigned to the interface IF2 by an RA message 850 including the third lower-level prefix P113 (to be described later) as shown in Fig. 10 and the original prefix P1. In this case, too, the original prefix P1 remains unchanged, and MN 200 has no need to transmit a BU message to HA 260 and/or CN 270 to request to newly perform the binding of the lower-level prefixes P111 and P113 to HoA of MN 200. When the interface IF2 is connected to the Non-3GPP network, MN 200 may request the LMM domain 210 (LMA 222) that the lower-level prefix generated by extending the prefix P1 and already assigned should be assigned. When this request is given, the lower-level prefix P12 is assigned via the Non-3GPP network.

Next, when power is turned on at the interface IF3 of MN 200 (860 in the figure), and when the interface IF3 is attached to MAG 234 and an associate message 865 is transmitted to the LMA 222, the lower-level prefix P112 is assigned to the interface IF3 by an RA message 870 including the second lower-level prefix P112 (to be described later) in Fig. 10 and the original prefix P1. In this case, too, the original prefix P1 remains unchanged, and MN 200 has no need to transmit the BU message to HA 260 and/or CN 270 to request to newly perform the binding of the lower-level prefixes P111, P113 and P112 to HoA of MN 300.

<The assigned lower-level prefixes and routing ratio>

When it is referred to Fig. 9 and Fig. 10, the fourth lower-level prefix P114 is within the space of 66 bits through extension of the original prefix P1 by 2 bits, but it is not assigned to the interfaces IF1 to IF3. As already described, for the packet, which has the lower-level prefixes in the space not assigned as destination, the routing can be carried out to the interfaces IF1 to IF3 connected according to the weighting of routing ratio. As shown in Fig. 10, all of the assigned lower-level prefixes P111, P113 and P112 have the same prefix length. This means that the interfaces IF1 to IF3 have the same routing ratio weighting.

By a method to give the weighting of different routing ratios to the interfaces IF1 to IF3, MN 200 may give the weighting in a request message 810. In this case, MN 200 adds the number of interfaces (num = 3), i.e. the interfaces IF1 to IF3 in the request message 810, and the weighting of the interfaces IF1 to IF3 is given in it. In the processing of prefix length - extension 820, the LMA 222 can extend the length of the original prefix P1 according to the weighting, and by extending as shown in Fig. 6, for instance, the routing ratio can be set as IF1 : IF2 : IF3=8 : 2 : 1.

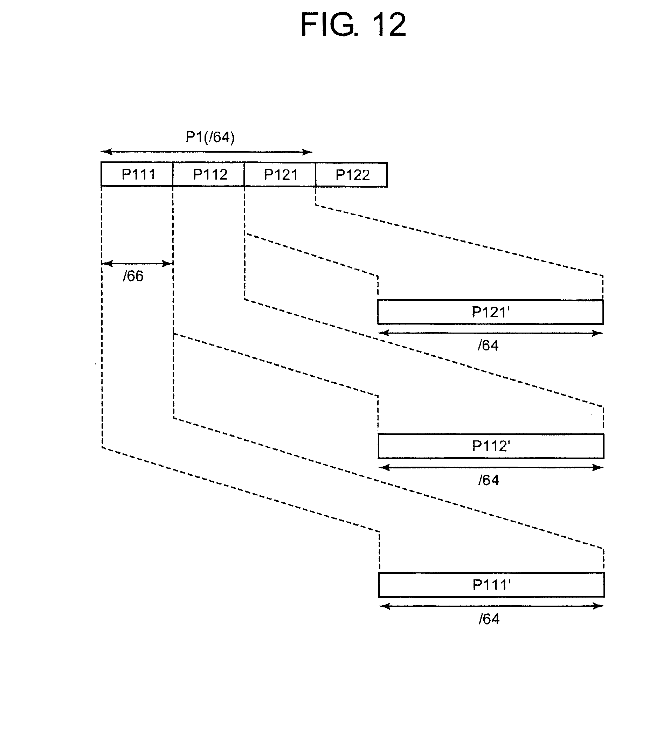

The routing ratio of the interfaces IF1 to IF3 can be given by other methods. As one of the desirable methods, a desired rank "p" of the routing ratio of each position is given by using the position of the continuous lower-level prefixes P111, P112, P113 and P114. For instance, it is set that the routing ratio of a lower-level prefix at a forward position is made higher than the one at rearward positions. Here, it is supposed that the lower-level prefix P111 at a first position is the desired rank p = 1, that the lower-level prefix P112 at a second position is the desired rank p = 2, and that the lower level prefix P113 at a third position is the desired rank p = 3. The positions of the prefixes continuous to each other show positional relationship when the values of the prefixes are aligned according to the value when comparison is made in term of number as shown in Fig. 12.

When power is turned on at the interfaces IF1 to IF3, MN 200 gives the desired rank "p" of each of the interfaces IF1 to IF3, and the LMA 222 assigns the lower-level prefixes according to the desired rank "p" of each of the interfaces IF1 to IF3. Fig. 9 shows the desired rank "p". After the procedure 820 when the power is turned on at the interface IF2, when an associate message 845 is transmitted to the LMA 222, MN 200 gives instruction on the desired rank p = 3. As a result, in an RA message 850, the lower-level prefix P113 at the third position is assigned to the interface IF2. After the procedure 840 when power is turned on at the interface IF3, when an associate message 865 is transmitted to the LMA 222, MN 200 gives instruction on the desired rank p = 2. As a result, in the RA message 870, the lower-level prefix P112 at the second position, which has a rank lower than that of the interface IF1 and higher than that of the interface IF3, is assigned to the interface IF3.

It would be obvious to those skilled in the art that the instruction on the desire rank "p" can be made at any time regardless of whether it is the time of association or not. For this reason, MN 200 can change the desired rank of the interfaces IF1 to IF3 at any time whenever it is wanted. Also, as the message where the desired rank "p" is embedded, other message such as a DHCP message or a neighbor advertisement (NA) message may be used in addition to the association messages 845 and 865.

The method as described in the first embodiment of the present invention can also be applied in the case where a plurality of connections (PDN connections) is generated from one interface of MN 200. For instance, when the prefix P1 is assigned to a connection, which is established when the 3GPP interface IF1 (or Non-3GPP interface) is connected to a 3GPP network (or Non-3GPP network), and when another connection is established from the same 3GPP interface IF1 (or Non-3GPP interface), a method to assign the lower-level prefix P11 or P12 generated through the extension of the prefix P1 can be used. That is, when a connection different from the existing connection is to be established at the 3GPP interface IF1, MN 200 requests that the lower-level prefix generated by extending the prefix already assigned to the existing connection is assigned.

<The second embodiment: the arrangement of the one short prefix from a plurality of the original prefixes>

In the second embodiment, the LMM domain 210 is arranged prefixes to assign to the interfaces IF1 to IF3 according to the request of MN 200. The prefixes are short prefixes combined continuous original prefixes, and the relation between these prefixes is established. The original prefixes P111, P112, P121 and P122 each with 64 bits as shown in Fig. 11 are continuous to each other. By binding the space of 64 bits together, a prefix P1 with 62 bits (hereinafter referred as "upper-level prefix") can be arranged. The original prefix P111 with 64 bits is assigned to the first interface IF1 of MN 200, the original prefix P112 with 64 bits is assigned to the second interface IF2 of MN 200, and the original prefix P121 with 64 bits is assigned to the third interface IF3 of MN 200. No assignment is made to the prefix P122.

On the message sequence of the second embodiment, description can be given by referring to the Fig. 9 as given above. First, MN 200 notifies the number of interfaces (num), which would be connected to the LMM domain 210, by a request message 810 to the LMM domain 210. The LMM domain 210 discovers a series of continuous original prefixes enough to assign all of the interfaces of MN 200 and combines them together, and an upper-level prefix P1 is made up. Then, each time each of the interfaces of MN 200 is connected, the original prefixes P111, P112 and P121 are assigned. The original prefix P122 is not assigned, but a packet, which has the prefix P122 as the destination address, is processed by the routing according to the desire of MN 200 as described above. Further, positions of the original prefixes P111, P112 and P121 to constitute the upper level prefix P1 can be used to indicate the rank of the interfaces. Also, MN 200 transmits only a BU message for the binding HoA of MN 200 to the upper-level prefix P1 to HA 261 or CN 270.

There is another method, according to which the LMM domain 210 simply assigns a first original prefix P111 to the interface IF1. When the interface IF2 is connected, MN 200 requests a second original prefix P112, which is adjacent to the first original prefix P111 and can make up the upper-level prefix P1 to the LMM domain 210. When the interface IF3 is connected, MN 200 requests a third original prefix continuous to the original prefix P112 to the LMM domain 210. The LMM domain 210 checks whether it is possible to use the third original prefix or not. If it can be used, a third original prefix P121 is assigned to the interface IF3. Also, from the three original prefixes P111, P112, and P121, and from the original prefix P122, an upper-level prefix P1 is made up.

In case the third original prefix cannot be used, the first original prefix P11 and the second original prefix P112 already assigned must be changed so that an upper-level prefix P1 can be made up. Further, description will be given by referring to Fig. 11. When the third original prefix P121 cannot be used, the LMM domain 210 replaces the already assigned and continuous first original prefix P11 and the second original prefix P112 by another original prefix, which can make up the three original prefixes to an upper level prefix P1 with 62 bits. In this method, it is necessary to change the upper-level prefix P1, while it provides flexibility for the assignment of the original prefixes for the LMM domain 210.

<Restriction on the prefixes>

Depending on the disposition and the arrangement of the LMM network, the assignment of the original prefixes may be restricted. For instance, a certain original prefix is used for specific purpose, e.g. the original prefix may have access only to 3GPP service. As another restriction, there may be the case where the original prefix with 64 bits only may be assigned to a specific type of interface. In this case, the first embodiment is inconvenient in that the lower-level prefix P11 with 65 bits longer than 64 bits and the lower-level prefixes P121 and P122 with 66 bits are assigned to the interfaces IF1 to IF3 as shown in Fig. 3A and 3B. For this reason, in the second embodiment, as shown in Fig. 11, by assigning the original prefixes P111, P112, P121 and P122 with 64 bits continuous to each other, it is possible to cope with the restriction on the number of bits. As another measure for this purpose, when there is no restriction on the number of bits, the mode of the first embodiment is used, and in case there is no restriction on the number of bits, the mode of the second embodiment or the mode of the third embodiment (as to be described later) may be used.

<The third embodiment: Prefix mapping>

According to the third embodiment, the LMM domain 120 assigns unique original prefix to MN 200 according to the request of MN 200. Then, the number of bits of the original prefix is extended, and a plurality of lower-level prefixes is generated. The lower-level prefixes is mapped to already assigned prefixes with the same number of bits as the original prefixes, and mapping relation of the original prefixes to the assigned prefixes is established.

Fig. 12 shows a final prefix mapping in the third embodiment of the invention. The original prefix P1 with 64 bits are assigned to MN 200. Because the number of interfaces, to which MN 200 is finally connected, is 3, from the original prefix P1 with 64 bits, the lower-level prefixes P111, P112 and P121 are generated. The lower-level prefixes of 66 bits, i.e. P111, P112, and P121, are processed by the mapping to the already assigned prefixes P111', P112', and P121', each of which has 64 bits similarly to the original prefix P1. Then, together with the lower-level prefixes P111, P112, and P121 extended from the original prefix, the already assigned prefixes P111', P112', and P121' are assigned to the interfaces IF1, IF2 and IF3 of MN 200 respectively. By this mapping, the assigned prefixes P111', P112', and P121' to be assigned to the interfaces IF1, IF2 and IF3 respectively are independent from each other, and these are also independent from the original prefix P1.

Now, description will be given on the assignment of the original prefixes to the already assigned prefixes and on the mapping of the extended prefixes. First, when the interface IF1 of MN 200 is connected to the network of the LMM domain 210, the prefix P111' is assigned. In this case, MN 200 requests the LMM domain 210 to assign the original prefixes. When the original prefixes are requested, MN 200 may ask the mapping of the original prefixes with the already assigned prefixes P111'. After allowing this request, the LMM domain 210 assigns the original prefixes P1 to the interface IF1. Here, there is only one already assigned prefix and the original prefix P1 is processed by mapping to the prefix P111'.

Next, when the interface IF2 is connected to the LMM domain 210, the prefix P112' is assigned to the interface IF2. Then, this prefix is used as the already assigned prefix, and this is processed by mapping on the lower-level prefix extended from the original prefix P1. For instance, the lower-level prefix P11 of 65 bits extended from the original prefix P1 is processed by mapping on the lower-level prefix P111' of 64 bits assigned to IF1. Also, the lower-level prefix P12 of 65 bits is processed by mapping on the already assigned prefix P122' of 64 bits as assigned to IF2.

Further, when the interface IF3 is connected to the LMM domain 210, the prefix P121' is assigned to the interface IF3, and it is processed by mapping on the lower-level prefix generated by the extension of the original prefix P1. In this case, the mapping is finally carried out as shown in Fig. 12. The lower-level prefixes P111 and P112 are processed by mapping on the prefixes P111' and P112' already assigned. Also, the lower-level prefix P121 is processed by mapping on the already assigned prefix P121'. In a method to divide the original prefix P1, in addition to a method to divide by extending the prefix length as described above, an address, which can be generated from the lower-level prefix of P1 and from P1, may be divided in terms of numerical value. For instance, if it is assumed that a value expressed by lower bits (interface ID) of the address is between 1 and 12, for instance, it can be divided to three parts: 1 to 4, 5 to 8, and 9 to 12. The mapping relation between the lower-level prefix and the already assigned prefix can be maintained by the LMA 222 and MN 200.

As another method for mapping, description will be given here on an example of a method to generate address by using destination address of the packet to be transferred when the LMA 222 intercepts a packet destined to an address in the lower-level prefix P111. Here, it is supposed that the first address of the lower-level prefix P111 generated from the original prefix P1 is P111_FIRST. and the last address is P111_LAST. Also, it is supposed that the first and the last addresses of the already assigned prefix P111' are: P111'_FIRST and P111'_LAST respectively. The destination address A_DEST of the packet received by the LMA 222 is within the lower-level prefix P111. Thus, the LMA 222 transfers the packet to the address A_MAPPED after the mapping.

$$A\_MAPPED = (A\_DEST - P111\_FIRST) \times (P111'\_LAST - P111'\_FIRST) /$$
$$(P111\_LAST - P11\_FIRST) + P111'\_FIRST$$

Instead of maintaining the mapping relation between the lower-level prefix and the already assigned prefix, by using the above method, the LMA 222 and MN 200 can generate an address to be processed by the mapping to the address, which belongs to the lower-level prefix, and this address can be used as an address for transfer destination.

The advantages of the third embodiment lie in that the prefixes P111', P112' and P121' assigned to the interfaces when the interfaces IF1, IF2 and IF3 are connected to the LMM domain 210 are independent from each other, and that these are independent from the original prefix P1. This means that the prefixes can be assigned according to prefix assignment restriction of the operator (e.g. the prefix length is restricted to 64 bits; a certain prefix range is assigned only to a specific interface, etc.)

When MAG 230, MAG 232 and MAG 234 correspond to the use of the original prefix P1 respectively and when MN 200 transmits the packets, MN 200 may simply transmit the packets via one of interfaces (IF1, IF2 or IF3) where the addresses or lower-level prefixes P111', P112' or P121' are assigned by using the addresses generated from the original prefix P1 (either one of the lower-level prefixes P111', P112', or P121') as the source address. For instance, in case the source address is an address generated from P112, MN 200 transmits the packet by using the interface where P112' is assigned. Similarly, when the LMA 222 receives a packet destined to the address in a space of the original prefix P1, the packet is simply transferred to an MAG (one of MAG 230, MAG 232 or MAG 234) where the prefix of the destination address as processed by mapping is advertised. For instance, in case the destination address is an address generated from the lower-level prefix P112, the packet is transferred to the MAG where the already assigned prefix P112' is advertised.

Here, if MAG 230, MAG 232 or MAG 234 is legacy (i.e. a packet with an address not in the space of the prefix advertised by the MAG itself cannot be transferred), the LMA 222 and MN 200 must encapsulate the packet. For instance, in case MN 200 wants to transmit an address relating to the lower-level prefix P112 as a source address, it is necessary to encapsulate the packet to the LMA 222 by using an address generated from the already assigned prefix P112' as a source address. Similarly, the LMA 222 must intercept the packet having an address relating to the lower-level prefix P121 as a destination address and must transfer the packet to MAG 234 by encapsulating to a packet having the prefix P121' as destination address. In this case, such packet encapsulation is an overhead processing to the LMA 222 and MN 200, but there is a method to eliminate the necessity of an excessive encapsulation. Even when MAG corresponds to the use of the original prefix P1, if router, gateway, etc. in the network do not match the original prefix P1, the LMA 222 and MN 200 may encapsulate the packet and may transfer it by using an address belonging to the already assigned prefix.

<Mode selection>

Regarding the first to the third embodiments as described above as a first to a third operation mode respectively, a mechanism is provided, which the LMA 222 and MN 200 can select. Because the first to the third embodiments have different advantages, the LMA 222 and MN 200 may select either one of the first to the third modes, depending on different situations and necessities. For instance, in case the prefix (the original prefix P1) of the LMM domain 210 is in shortage, and if the LMM domain 210 selects the first operation mode regardless of the number of prefixes assigned to MN 200, the size of the prefix used by MN 200 is always equal to the prefix length decided in the LMM domain 210. As another example, when the first operation mode is selected, if total prefix resource of the LMM domain 210 is fragmented and there is no original prefix which can assign the lower-level prefix to all of the interfaces IF1 to IF3, the LMM domain 210 may select the second or the third operation mode.

As one of the methods to determine the operation mode by the LMA 222 and MN 200, there is a method to exchange capability. In this Capability Exchange, when MN 200 is first connected to the LMM domain 210, capability is embedded in a specific message signaling or other protocol (e.g. AAA signaling), and this is exchanged.

<Format of the prefix requesting/notifying message>

Actual format is not specifically indicated for the prefix requesting message and the prefix notifying message in the first to the third embodiments, while it would be obvious to those skilled in the art that it can be accomplished by using various types of transport mechanisms. For instance, the contents of these messages can be embedded, desirably as ND (Neighbor Discovery) message of ICMP (Internet Control Message Protocol), e.g. NA (Neighbor Advertisement) message or RS (Router Solicitation) message to be transmitted to an access router of the LMM domain 210, or further, as a special option in the BU message.

As another desirable method, a prefix requesting message and the prefix notifying message are embedded in a DHCP (Dynamic Host Configuration Protocol) message to be transmitted to DHCP relay or server in the LMM domain 210. This method is a special variation where the LMM domain 210 uses DHCP to assign the prefix to MN 200.

There is still another desirable method, according to which a prefix requesting message and a prefix notifying message are inserted into AAA signaling for authentication transmitted between MN 200 and the LMM domain 210. This method is an extension of DIAMETER or RADIUS protocol, but it is not limited to this. This method is specifically advantageous in that, when power is turned on at the interface IF of MN 200, a prefix requesting message and a prefix notifying message are transmitted. The AAA message is transmitted at all times as the first message when power is turned on at the interface IF of MN 200. When the prefix requesting message and the prefix notifying message are added to the AAA message, it is possible to alleviate unnecessary overhead and processing delay.

There is yet still another desirable method, according to which the prefix requesting message and the prefix notifying message are disposed within the frame of a layer 2 establishing signaling. For instance, these messages are disposed within 3GPP signaling between MN 200 and eNodeB or PPP (Point-to-Point Protocol) or in the frame of setup message between MN 200 and ePDG. This layer 2 establishing signaling is advantageous in that it is generated when power is turned on at the interface IF of MN 200 or when power is shut down.

<Destination of the prefix requesting/notifying message>

Next, description will be given as to which node the prefix requesting message and the prefix notifying message is transmitted. In the message sequence as shown in Fig. 4 and Fig. 8, it is summarized as what is transmitted to the LMM domain 210, while it would be obvious to those skilled in the art that it is transmitted by using an actual physical node as the destination without departing from the scope of the invention. Actual physical node used as destination depends on the arrangement of the LMM domain 210. For instance, in case the LMM domain 210 is tightly closed, the operator does not want that the address of core node (e.g. LMA 222, AAA server 236) is publicly known. In this case, the prefix requesting message and the prefix notifying message are always transmitted to the MAG and the MAG processes the messages, or transfers them to the other mode (e.g. to the DHCP server or to the AAA server 236). When the LMM domain 210 assigns the prefix to MN 200 by using DHCP, the prefix requesting message and the prefix notifying message are transmitted to a DHCP server in a certain mode or as option in the DHCP requesting message. In this method, the DHCP server is a node for the management of prefix assignment, and the overhead of signaling can be alleviated to the utmost extent. Also, in case MN 200 is connected to a CSG cell, it may be transmitted to a node (Home eNodeB) for the management of the CSG cell.

As another method, MN 200 can transmit the prefix requesting message and the prefix notifying message to the LMA 222. This method is advantageous in that the LMA 222 must manage the prefix assignment of MN 200 by its own binding cache. Depending on the arrangement of the LMM domain 210, the LMA 222 is a node, which is responsible to assign the prefix to MN 200. In this case, it is a natural method to transmit the prefix requesting message and the prefix notifying message to the LMA 222.

According to another method, MN 200 transmits the prefix requesting message and the prefix notifying message to an AAA server 236 by embedding it as option in AAA signaling. This method is advantageous in that the prefix requesting message and the prefix notifying message are transmitted when power is turned on at the interface IF, and that the AAA signaling is also transmitted at this moment. Depending on the arrangement of the LMM domain 210, the AAA server 236 may control the assignment and the management of the prefix.

<LMA is HA>

In Fig. 2, it is assumed that MN 200 is roaming in an external LMM domain 210, while it would be obvious to those skilled in the art that the present invention can also be applied to the case where MN 200 is roaming in the LMM domain 210 of its home. In this case, LMA 222 is HA of MN 200 at all times. Also, the prefix P1 assigned to MN 200 is a home prefix of MN 200. For this reason, MN 200 can perform communication with CN 270 by using an address in the space of the home prefix. Further, by SCTP (Stream Control Transmission Protocol) or SHIM (Site Multi-homing by Intermediation), MN 200 can communicate with CN 270 by using a plurality of addresses in the space of home prefix. According to the present invention, by using a prefix instead of a plurality of addresses, it is possible to decrease the signaling between MN 200 and CN 270.

According to still another method, MN 200 can simultaneously use the original prefix P1 at the same time in the home domain 260 and in the external LMM domain 210 and can bind the original prefix P1 at HA 261 to HoA of MN 200 as a care-of prefix (CoP). According to this method, by setting up the binding of CoP similarly at CN 270, it is advantageous in that each of the interfaces IF1 to IF3 can be reached without the need to have a plurality of bindings (binding of HoA to each CoA of each of the interfaces IF1 to IF3), and there is only the need to have one binding (binding of HoA to a single CoP).

In the above, description has been given on the present invention by giving examples on the embodiments, while it would be obvious to those skilled in the art to make changes and modifications without departing from the spirit and the scope of the invention. For instance, description has been given above on the network-based local mobility management (net LMM) domain while it would be obvious to those skilled in the art that this can be applied to a local mobility management domain using hierarchical mobile IP (HMIP).

<HMIP>

In HMIP, MN acquires a local CoA from an access router and obtains regional CoA from mobile anchor point (MAP). At MAP, MN binds its own regional CoA with a local CoA. Also, at HA or CN, it binds its own HoA with the regional CoA. When the present invention is applied, MN acquires the regional CoA from MAP and also acquires the local CoA from the access router. The regional CoA is bound with the local CoA.

When MN has a plurality of interfaces, it means that it has a plurality of local CoA's. MN can bind these local CoA's with the same regional CoA's. In this case, this is similar to the use of one prefix in the NetLMM domain to a plurality of interfaces, and there are complicacies and problems in it. For instance, MN must explicitly indicate the wishing of the routing and set up and must manage the binding identifier between the local CoA's. In this case, by applying the third embodiment, the relation between the address that the number of bits of the regional CoA increased and the local CoA can be set up without explicitly negotiating the routing regulations. As an example, it is supposed that MN has three local CoA's. When the present invention is applied, MN and MAP establish the mapping relation of the prefixes, and three addresses are generated by increasing the number of bits from the regional CoA (original prefix P1), and the first, the second and the third addresses are given to the first, the second and the third local CoA's respectively by mapping.

According to still another method, a plurality of regional CoA's is used. By this method, it is possible to prevent the complicacies to manage a plurality of bindings on one regional CoA. Also, according to the present invention, it is possible to set up the relation between the original prefix and a plurality of regional CoA's by applying the original prefix to be assigned from MAP to MN.

Each functional block used in the explanations of each embodiment of the present embodiment, described above, can be realized as a large scale integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI. The method of forming the integrated circuit is not limited to LSI and can be actualized by a dedicated circuit or a general-purpose processor. A field programmable gate array (FPGA) that can be programmed after LSI manufacturing or a reconfigurable processor of which connections and settings of the circuit cells within the LSI can be reconfigured can be used. Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

INDUSTRIAL APPLICABILITY

The present invention provides such effects that, even when one prefix is assigned to a mobile node having a plurality of interfaces, different prefixes can be assigned to each of the plurality of interfaces, and further, it is possible to decrease the number of binding update messages and the packet size. The invention also provides the effects that it is possible to decrease the number of binding update message and to reduce the packet size even when different prefixes are assigned to each of a plurality of interfaces of the mobile node, and further, the effects that, even when the prefix and prefix length to be assigned to the mobile node are restricted, the number of the binding update messages and the packet size can be decreased, and the invention can be applied for the network-based local mobility management.

**Claims**

1.  A prefix assigning method for assigning one prefix to a mobile node having a plurality of interfaces, wherein said method comprises:

    a prefix length extending step for extending length of a first prefix by using said assigned prefix as said first prefix, and of generating a plurality of second prefixes to be assigned to each of said plurality of interfaces; and an assigning step for selectively assigning said generated plurality of second prefixes to said plurality of interfaces.

2.  The prefix assigning method according to claim 1, wherein, in said prefix length extending step, length of said first prefix is extended by using a prefix where said mobile node is assigned from an external domain as the first prefix, a plurality of prefixes are generated in order to assign to each of said plurality of interfaces and are notified to the external domain, and by comparing length of said second prefix or a value of the prefix, distribution ratio of packets to be set by routing to said plurality of interfaces is indicated.

3.  A prefix assigning system for assigning one prefix to a mobile node having a plurality of interfaces, wherein said system comprises:

    a prefix length extending unit for generating a second prefix to be assigned to each of a plurality of interfaces by extending length of a first prefix by using said assigned prefix as said first prefix; and an assignment unit for selectively assigning said generated plurality of second prefixes to said plurality of interfaces.

4.  The prefix assigning system according to claim 3, wherein, by said prefix length extending unit, said mobile node extends length of said first prefix by using a prefix assigned from an external domain as a first prefix, generates a plurality of second prefixes to be assigned to each of said plurality of interfaces and notifies to said external domain, and instructs distribution ratio of packets to be sent by routing to said plurality of interfaces, depending on length of said second prefix or on position in space of the prefix.

5.  A mobile node in a prefix assigning system to assign one prefix to a mobile node having a plurality of interfaces, wherein said mobile node comprises:

    a prefix length extending unit for extending length of a first prefix by using said assigned prefix as said first prefix and for generating a plurality of second prefixes to be assigned to each of said plurality of interface; and a transmission unit for transmitting said assigned first prefix and a message to be sent by binding to a home agent of said mobile node to the home agent of said mobile node.

6.  A prefix assigning method for assigning different prefixes from an external domain to each of a plurality of interfaces of a mobile node, wherein said method comprises:

a step for notifying number of said interfaces from said mobile node to said external domain;

a step for said external domain selectively assigns a plurality of the first prefixes as many as said notified interfaces to said plurality of interfaces; and

a step for said mobile node transmits to home agent of said mobile node messages to be sent by binding second prefixes and home address of said mobile node by using common portion of said plurality of first prefixes as said second prefixes.

7. A prefix assigning system for assigning different prefixes from an external domain to each of a plurality of interfaces of a mobile node, wherein said system comprises;

a notification unit for notifying number of said interfaces from said mobile node to said external domain;

an assignment unit for said external domain selectively assigns a plurality of the first prefixes as many as said notified interfaces to said plurality of interfaces; and

a transmission unit for said mobile node transmits messages for sending by binding second prefixes and home address of said mobile node to home agent of said mobile node by using common portion of said plurality of first prefixes as said second prefixes.

8. A prefix assigning method for assigning one prefix to a mobile node having a plurality of interfaces, wherein said method comprises:

a step for extending length of a first prefix by using said assigned prefix as said first prefix, and generating a plurality of second prefixes, and mapping each of said generated plurality of second prefixes to a third prefixes with the same length as that of said first prefixes; and

a step for selectively assigning said mapped plurality of third prefixes to said plurality of interfaces.

9. A prefix assigning system for assigning one prefix to a mobile node having a plurality of interfaces, wherein said system comprises:

a prefix length extending unit for extending length of a first prefix by using said assigned prefix as said first prefix, generating a plurality of second prefixes, and processing each of said generated plurality of second prefixes to a third prefix with the same length as that of said first prefix by mapping; and

an assignment unit for selectively assigning said mapped plurality of third prefixes to said plurality of interfaces.

10. A prefix assigning method for assigning one prefix to a mobile node having a plurality of interfaces from an external domain or for assigning a prefix different from said external domain to each of a plurality of interfaces of said mobile node, wherein said method comprises at least two of the following prefix assigning steps:

a first prefix assigning step of extending length of a first prefix by using said assigned prefix as said first prefix, generating a plurality of second prefixes to be assigned to each of said plurality of interfaces, and selectively assigning said generated plurality of second prefixes to said plurality of interfaces;

a second prefix assigning step of notifying number of said interfaces to said external domain from said mobile node, and selectively assigning said external domain to a plurality of first prefixes as many as said notified interface to said plurality of interfaces, and transmitting a message for binding of home address of said mobile node with second prefixes by using common portion of said plurality of first prefixes as said second prefixes to home agent of said mobile node; and

a third prefix assigning step of generating a plurality of second prefixes by extending length of first prefix by using said assigned prefix as said first prefix, carrying out mapping to a third prefix having the same length as that of said first prefix each of said generated plurality of second prefixes, and selectively assigning said mapped plurality of third prefixes to said plurality of interfaces; and

further, a step of selecting one of said first, said second, and said third prefix assigning steps.

11. A prefix assigning system for assigning one prefix to a mobile node having a plurality of interfaces from an external domain or for assigning a prefix different from said external domain to each of a plurality of interfaces of said mobile node, wherein said system comprises at least two of the following prefix assigning steps:

a first prefix assigning unit for extending length of a first prefix by using said assigned prefix as said first prefix, for generating a plurality of second prefixes to be assigned to each of said plurality of interfaces, and for selectively assigning said generated plurality of second prefixes to said plurality of interfaces;

a second prefix assigning unit for notifying number of said interfaces to said external domain from said mobile node, selectively assigning said external domain to a plurality of first prefixes as many as said notified interfaces to said plurality of interfaces, and said mobile node transmits a message for binding of second prefix and home address of said mobile node to home agent of said mobile node by using common portion of said plurality of first prefixes as said second prefixes;

a third prefix assigning unit for generating a plurality of second prefixes by extending length of first prefix by using said assigned prefixes as said first prefixes, carrying out the mapping to a third prefix having the same length as that of said first prefix each of said generated plurality of second prefixes, and for selectively assigning said mapped plurality of third prefixes to said plurality of interfaces; and

further, there is provided unit for selecting one of said first, said second, and said third prefix assigning unit.

# FIG. 1

UPPER LAYER BLOCK — 200

130

194    120

ROUTING UNIT

ROUTING TABLE

PREFIX REQUESTING/ NOTIFYING UNIT — 150

PREFIX MANAGING UNIT — 160

140

ORIGINAL PREFIX BINDING UNIT — 170

192

110

NETWORK INTERFACE — IF3

IF1   IF2

# FIG. 2

# FIG. 3A

# FIG. 3B

24

# FIG. 4

EP 2 341 753 A1

# FIG. 5

EP 2 341 753 A1

MN  200
MAG (3GPP)  230
MAG (WLAN)  232
MAG (WiMax)  234
LMA  222
HA/CN  261(270)

3GPP | WLAN | WiMax

(1) Assoc
(2) PBU+PBA
(3) RA(P1)
(4) BU(P1, HoA)

P11 AND P12 ARE GENERATED FROM P1

(5) Assoc(IF1=P11, IF2=P12, P1)
(6) PBU+PBA
(7) RA(P11, P1)
(8) RA(P12, P1)

P121 AND P122 ARE GENERATED FROM P12

(9) Assoc(IF2=P121, IF3=P122, P1)
(10) PBU+PBA
(11) RA(P121, P1)
(12) RA(P122, P1)

# FIG. 6

| P1(/64) |
|---|

| P11(/65) → IF1 |
|---|

| P12(/65) |
|---|

| P121(/66) |
|---|

| P122(/66) |
|---|

| P1221(/67) → IF2 |
|---|

| P1222(/67) |
|---|

| P12221(/68) |
|---|

| P12222(/68) → IF3 |
|---|

# FIG. 7

# FIG. 8

EP 2 341 753 A1

# FIG. 9

EP 2 341 753 A1

# FIG. 10

| P1(/64) |
|---|

| P111(/66) → IF1 |
|---|

| P112(/66) → IF3 |
|---|

| P113(/66) → IF2 |
|---|

| P114(/66) |
|---|

# FIG. 11

P11

| P111 | P112 | P121 | P122 |
|---|---|---|---|

/62

/63

/64

P1

# FIG. 12

P1(/64)

| P111 | P112 | P121 | P122 |
|------|------|------|------|

/66

P121'

/64

P112'

/64

P111'

/64

# FIG. 13

## PRIOR ART

# FIG. 14

## PRIOR ART

BCE:
P1 ←→ MAG1 ←→ BID1
P1 ←→ MAG2 ←→ BID2
P1 ←→ MAG3 ←→ BID3

12

LMA

PBU(BID=1)

PBU(BID=2)

PBU(BID=3)

MAG3
(WLAN)

MAG1
(3GPP)

PMIP DOMAIN

MAG2
(WiMax)

RA(P1)

RA(P1)

RA(P1)

MN(IF1,
IF2, IF3)

10

<table>
<tr><td colspan="2" align="center">**INTERNATIONAL SEARCH REPORT**</td><td>International application No.<br>PCT/JP2009/004825</td></tr>
</table>

**A. CLASSIFICATION OF SUBJECT MATTER**
*H04W80/04*(2009.01)i

According to International Patent Classification (IPC) or to both national classification and IPC

**B. FIELDS SEARCHED**

Minimum documentation searched (classification system followed by classification symbols)
H04W4/00-H04W99/00, H04B7/24-H04B7/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-72685 A (NTT Docomo Inc.),<br>17 March 2005 (17.03.2005),<br>& US 2005/0047348 A2    & EP 1511249 A2<br>& EP 2009852 A2 | 1-11 |
| A | WO 2007/007856 A1 (Panasonic Corp.),<br>18 January 2007 (18.01.2007),<br>& JP 2009-500876 A       & US 2009/0116463 A1 | 1-11 |
| A | Sarikaya B., Home Agent Placement and IP<br>Address Management for Integrating WLANs with<br>Cellular Networks, IEEE Wireless communications,<br>2006.12, Vol.13 Issue:6, PP77-86 | 1-11 |
| A | Hyeyeon Kwon et al., Consideration of UMTS-WLAN<br>Seamless Handover, IEEE international Symposium<br>on Multimedia, IEEE, 2005.12.12 | 1-11 |

☐ Further documents are listed in the continuation of Box C.   ☐ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 20 November, 2009 (20.11.09) | 01 December, 2009 (01.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03107600 A1
- WO 200167798 A1
- WO 2004036786 A1
- US 20060227792 A1
- WO 2006058206 A2
- WO 2007046624 A1
- WO 2007149025 A1
- US 20060140164 A1
- US 20060209760 A1
- EP 1564958 B1

### Non-patent literature cited in the description

- **Maenpaa, S. ; Vesterinen, S.** *A Method and System for Local Mobility Management,* December 2003
- **El-Malki, K. et al.** *Hierarchical Mobility Management for Wireless Networks,* September 2001
- **O'Neill,A.** *Mobile Node Handoff Methods and Apparatus,* April 2004
- **Wetterwald, P. et al.** *Access network clusterhead for providing local mobility management of a roaming IPv4 Node,* October 2006
- **Chari, A. et al.** *A method of subnet roaming within a network,* June 2006
- **Park, S. et al.** *Method and apparatus to provide for a handover on a wireless network,* April 2007
- **Rune, J. et al.** *Arrangements and methods in moving networks,* December 2007
- **Patel, A ; Leung, K.** *Methods and apparatus for using DHCP for home address management or nodes attached to an edge device and for performing mobility and address management as a proxy home agent,* June 2006
- **Saito, S. et al.** *Communication processing system, communication processing method, communication terminal, data transfer controller, and program,* September 2006
- **Cho, S. et al.** *Method for assigning a virtual-ip zone in a mobile IPv6 system,* October 2007
- **Johnson, D.B. ; Perkins, C.E. ; Arkko, J.** Mobility Support in IPv6. *Internet Engineering Task Force Request for Comments 3775,* June 2004
- **Gundavelli, S. et al.** Proxy Mobile IPv6. *Internet Engineering Task Force Draft: draft-ietf-netlmm-proxymip6-11.txt,* February 2008
- **Soliman, H. et al.** Hierarchical Mobile IPv6 Mobility Management (HMIPv6). *Internet Engineering Task Force Request for Comments 4140,* August 2005
- **Wakikawa, R. et al.** Multiple Care-of Addresses Registration. *Internet Engineering Task Force Draft: draft-ietf-monami6-multiplecoa-06.txt,* February 2008